# EUROPÄISCHE PATENTSCHRIFT

(11) **EP 3 392 100 B1**
(45) Veröffentlichungstag und Bekanntmachung des Hinweises auf die Patenterteilung: **12.08.2020**
(21) Anmeldenummer: 18168276.6
(22) Anmeldetag: 19.04.2018
(51) Int. Cl.: B60S 3/00, B60S 3/04

(54) **BEHANDLUNGSSTRASSE MIT FAHRZEUG-POSITIONSÜBERWACHUNG**
TREATMENT LINE WITH VEHICLE POSITION MONITORING
LIGNE DE TRAITEMENT À SURVEILLANCE DE POSITION DE VÉHICULE

(30) Priorität: 19.04.2017 DE 202017102312 U
(43) Veröffentlichungstag der Anmeldung: 24.10.2018
(73) Patentinhaber: Otto Christ AG, 87734 Benningen (DE)
(72) Erfinder: CHRIST, Markus, 87700 Memmingen (DE)
(74) Vertreter: Ernicke, Moritz

(56) Entgegenhaltungen:
- EP-A2- 1 795 407
- DE-A1- 4 131 786
- DE-C1- 19 622 391
- US-A1- 2005 217 701
- US-A1- 2008 029 135
- US-A1- 2013 239 992

## Beschreibung

Die Erfindung betrifft eine Technik zur Überwachung der Position von einem oder mehreren Fahrzeugen in einer Behandlungsstraße während eines Behandlungsvorgangs sowie eine Technik zur Behandlung von Fahrzeugen in einer Behandlungsstraße auf Basis der Positionsüberwachung. Eine Behandlungsstraße weist ein angetriebenes Fördermittel auf, das ein oder mehrere Fahrzeuge durch die Behandlungsstraße bewegt und den Behandlungsaggregaten zuführt. Eine Behandlungsstraße ist somit zu unterscheiden von einer Portalbehandlungsanlage, bei der ein oder mehrere Behandlungsaggregate an einem fahrbaren Portal angeordnet sind, das gegenüber einem still stehenden Fahrzeug bewegt wird. Ferner ist eine Behandlungsstraße von oder einer Durchfahrt-Behandlungsanlage (auch Waschtunnel genannt) zu unterscheiden, bei der ein Fahrzeug durch seinen Eigenantrieb bewegt und einem oder mehreren Behandlungsaggregaten zugeführt wird.

Die Behandlungsstraße gemäß der vorliegenden Offenbarung kann also als eine "Fördernde Behandlungsstraße" bezeichnet sein. Nachfolgend wird aus Gründen der vereinfachten Darstellung der Begriff "Behandlungsstraße" verwendet.

Aus der EP 2 082 930 A1 und der EP 1 795 409 A2 sind Waschstraßen zur Oberflächenbehandlung von Fahrzeugen bekannt, die mittels einer Schleppvorrichtung durch die Behandlungsstraße bewegt werden. Am Einfahrtbereich der Waschstraße wird eine Fahrzeugkontur ermittelt, wobei die Erfassungsdaten des Fahrzeugs während eines Behandlungsvorgangs von Station zu Station zur Steuerung der dortigen Behandlungsaggregate weitergereicht werden.

Bei den bisher bekannten Behandlungsstraßen wird grundsätzlich davon ausgegangen, dass ein zu behandelndes Fahrzeug durch die gesteuerte und/oder bekannte Bewegung des Fördermittels bewegt wird und insbesondere im Anlagekontakt mit einem Mitnehmer der Schleppeinrichtung bleibt, so dass die momentane Position des Fahrzeugs eindeutig durch die Bewegung des Mitnehmers bzw. der Schleppvorrichtung vorgegeben ist.

Es hat sich allerdings gezeigt, dass gelegentlich der Anlagekontakt zwischen einem Fahrzeug und den Mitnehmern der Schleppvorrichtung verloren geht, wobei das Fahrzeug erheblich in der Längsrichtung der Behandlungsstraße nach vorne oder nach hinten von der vorgesehenen Position abweichen kann. Die verschiedenen Behandlungseinrichtungen oder Behandlungsstationen weisen in der Regel eigene Sicherheitseinrichtungen auf, durch die eine Beschädigung des Fahrzeugs vermieden wird, die beispielsweise aus einem zu frühen Zustellen oder zu späten Entfernen einer Waschbürste, eines Trocknungsbalkens oder eines anderen Behandlungsaggregats entstehen könnte.

Wenn eine solche Sicherheitseinrichtung eine Kollision erkennt oder einen sonstigen Sicherheitsfall detektiert, wird in der Regel die gesamte Behandlungsstraße abgeschaltet, so dass auch die Behandlungsvorgänge bei vorausfahrenden oder nachfolgenden Fahrzeugen unterbrochen und ggf. neu gestartet werden müssen. In der Regel sind manuelle Eingriffe nötig, um die Behandlungsstraße wieder in einen Regelbetrieb zu versetzen. Die gattungsgemäße

DE 196 22 391 C1 offenbart eine Sicherungsanordnung für eine Kraftfahrzeugwaschanlage. Die Sicherungsanordnung ist parallel zu einer Förderstrecke angeordnet, auf welcher einzelne Fahrzeuge durch die Anlage gefördert werden. Sie umfasst eine Sensorstrecke mit einzelnen dicht hintereinander liegenden Sensoren. Mittels der Sensorstrecke erkennt eine Erfassungseinrichtung die Position, Richtung und Geschwindigkeit jedes einzelnen Fahrzeuges. Eine Auswerteeinrichtung erkennt jede Änderung der Richtung und Geschwindigkeit. Die Position der Fahrzeuge wird als die Position der Vorderräder erfasst. Erkennt die Auswerteeinrichtung eine unzulässige Änderung der Position, wird sofort die Förderanlage stillgesetzt. Eine unzulässige Abweichung der Position kann darin bestehen, dass der auf einen eben noch belegten Sensor folgende Sensor bei Weiterförderung nicht belegt wird, woraus geschlossen wird, dass das Fahrzeug die zulässige Förderstrecke seitlich verlässt.

Es ist Aufgabe der vorliegenden Erfindung, eine Erkennungsvorrichtung und ein Fahrzeugbehandlungsverfahren zur Behandlung mindestens eines Fahrzeugs in einer Behandlungsstraße aufzuzeigen, durch die die vorgenannten Nachteile ganz oder teilweise vermieden werden. Ferner soll eine mit einer solchen Erkennungsvorrichtung ausgestattete Behandlungsstraße aufgezeigt werden sowie ein zugehöriges Behandlungsverfahren, die eine verbesserte Steuerung der Behandlungsstraße und der Behandlungsaggregate ermöglichen. Die Erfindung löst diese Aufgabe mit den Merkmalen des Vorrichtungshauptanspruchs 1 und des Verfahrenshauptanspruchs 12.

Die vorliegende Offenbarung umfasst verschiedene Aspekte, die jeweils einzeln oder in beliebiger Kombination zur Lösung der Aufgabe beitragen.

Gemäß einem ersten Aspekt umfasst die Erkennungsvorrichtung mindestens eine Gruppe von Erfassungsmitteln und eine Auswerteeinrichtung. Die Erfassungsmittel sind an bekannten Positionen entlang der Behandlungsstraße anordenbar und mit der Auswerteeinrichtung verbindbar bzw. verbunden. Die Auswerteeinrichtung ist dazu ausgebildet, Erfassungsdaten von den mehreren Erfassungsmitteln zu beziehen und daraus die momentane Position eines oder mehrerer Fahrzeuge innerhalb der Behandlungsstraße und/oder eine Abweichung eines Fahrzeugs von einer Soll-Position zu ermitteln.

Die Soll-Position ist aus einer gesteuerten und/oder erfassten Bewegung des Fördermittels ableitbar oder abgeleitet. Insbesondere kann eine anfängliche Referenz-Position eines Fahrzeugs zu dem Fördermittel, insbesondere zu einem Mitnehmer einer Schleppeinrichtung, erfasst oder gezielt vorgegeben werden. Aus dieser Referenz-Position, die grundsätzlich als konstant angenommen wird, und der bekannten Bewegung des Fördermittels ist während eines Behandlungsvorgangs also die Soll-Position eines oder mehrerer Fahrzeuge als absolute Soll-Position in Bezug auf die Behandlungsstraße ermittelbar. Weiter unten werden Möglichkeiten diskutiert, während des Behandlungsvorgangs von der anfänglichen Referenz-Position auf eine neue Referenz-Position eines Fahrzeugs zu dem Fördermittel zu schließen oder eine neue Referenz-Position zu ermitteln.

Die Ermittlung der momentanen Position oder der Abweichung von einer Soll-Position kann kontinuierlich während des gesamten Behandlungsvorgangs erfolgen. Alternativ und bevorzugt kann die Ermittlung intermittierend und beispielsweise bei einem vorgegebenen Zeittakt oder bei vorgegebenen Längenabständen oder Messpunkten entlang der Behandlungsstraße erfolgen, so dass der überwachungstechnische Aufwand reduziert wird.

Die Abweichung der momentan ermittelten Position von der Soll-Position wird als separater Parameter erfasst, der insbesondere quantitativ bestimmbar ist. Die Ermittlung der Abweichung kann erfolgen, bevor bzw. ohne dass eine etwaig vorhandene Sicherheitseinrichtung eines Behandlungsaggregats oder einer Behandlungsstation aktiviert oder ein Sicherheitsfall ausgelöst wird, sodass eine damit verbundene Abschaltung oder Störung der Behandlungsstraße vermieden werden kann. Vielmehr erlaubt die Ermittlung der Abweichung der momentanen Position von der Soll-Position einen kompensierenden Steuerungseingriff, um den Behandlungsvorgang optimal an die ermittele momentane Position anzupassen. Gemäß einem zweiten Aspekt, der für sich allein oder in Kombination mit dem ersten Aspekt genutzt werden kann, sind für die Erfassungsmittel besonders geeignete Ausbildungen vorgeschlagen. Eine erste Ausbildung sieht vor, dass zwei oder mehr Erfassungsmittel und insbesondere alle Erfassungsmittel einer Gruppe als im Bodenbereich angeordnete flächige Lichtaufnehmer ausgebildet sind. Sie können insbesondere als Solarzellen ausgebildet sein. Eine Solarzelle erzeugt ein Ausgangssignal, dass entsprechend der auf einer Rezeptorfläche aufgenommenen Lichtintensität steigt oder fällt. Insbesondere kann bei einer Solarzelle die aufgenommene Lichtenergie in elektrischen Strom gewandelt werden. Flächige Lichtaufnehmer und insbesondere Solarzellen weisen eine deutlich geringere Störanfälligkeit des Erfassungsergebnisses gegenüber Spritzwasser, Dampfbildung und sonstigen atmosphärischen Einflüssen innerhalb der Behandlungsstraße auf, als andere fotosensible Elemente wie beispielsweise Lichtschranken oder Fotodioden.

Eine zweite bevorzugte Ausbildung sieht vor, dass zwei oder mehr Erfassungsmittel und insbesondere alle Erfassungsmittel einer Gruppe als im Bodenbereich angeordnete und mit einem Fluid gefüllte flexible Hohlkörper ausgebildet sind, die mit einem oder mehreren Sensoren verbunden sind, insbesondere mit einem Drucksensor oder einem Strömungssensor. Beim Überfahren eines solchen Hohlkörpers durch ein Fahrzeugrad wird der Hohlkörper verformt, so dass das enthaltene Fluid komprimiert und/oder verdrängt wird. Durch den angebundenen Sensor kann entsprechend eine Änderung des Fluidzustands, insbesondere eines Fluiddrucks oder einer Fluidbewegung, erfasst werden. Durch den Hohlkörper wird das Fluid gegenüber der Außenatmosphäre gekapselt. Der Hohlkörper kann beispielsweise aus einem alterungsbeständigen und chemisch resistenten Kunststoff gefertigt sein, um den besonderen Anforderungen in einer Behandlungsstraße gerecht zu werden. Ferner ist es möglich, den Sensor in einen geschützten Bereich anzuordnen, der gegenüber dem Feuchtraum der Behandlungsstraße abgedichtet ist. Die flexiblen Hohlkörper können beispielsweise über Kupplungen mit einem Schnellverschluss mit einem Sensor verbunden sein, so dass im Falle eines Verschleißes ein schneller und kostengünstiger Austausch möglich ist.

Wiederum eine weitere Ausbildung sieht vor, dass zwei oder mehr Erfassungsmittel und insbesondere alle Erfassungsmittel einer Gruppe als entlang der Behandlungsstraße angeordnete Funk-Empfänger ausgebildet sind, die das Funksignal eines Reifendrucksensors empfangen und die Intensität des Funksignals oder eine Laufzeitdifferenz eines Funksignals zwischen zwei Funk-Empfängern ermitteln. Die Auswerteeinrichtung der Erkennungsvorrichtung kann entsprechend dazu ausgebildet sein, die momentane Position eines Reifeninnendrucksensors bzw. eines Fahrzeugrades auf Basis der Intensitäten zu ermitteln, die von mehreren Funk-Empfängern für dasselbe Funksignal ermittelt werden. Alternativ oder zusätzlich kann die Auswerteeinrichtung dazu ausgebildet sein, die momentane Position eines Reifeninnendrucksensors bzw. eines Fahrzeugrades auf Basis einer Laufzeitdifferenz eines Funksignals zu zwei oder mehr Funk-Empfängern zu ermitteln.

Eine wiederum alternative Ausbildung sieht vor, dass zwei oder mehr Erfassungsmittel als Zustandssensoren ausgebildet sind, die den momentanen Zustand eines Kontaktierungselementes erfassen, das in oder an der Schleppeinrichtung der Behandlungsstraße anordenbar ist und einen Kontaktierungszustand gegenüber einem Fahrzeugrad wiedergibt. Derartige Kontaktierungselemente können insbesondere an oder in einem Mitnehmer der Schleppvorrichtung angeordnet sein. Gegebenenfalls können Kontaktierungselemente mit unterschiedlichen Bauarten vorgesehen sein, die weiter unten erläutert werden. Ein Zustandssensor kann eine beliebige Ausbildung haben, beispielsweise als Magnetsensor, als kapazitiver Sensor oder als induktiver Sensor.

Ein weiterer Aspekt der Offenbarung sieht vor, dass die Erkennungsvorrichtung mindestens zwei Gruppen mit jeweils unterschiedlichen Erfassungsmitteln aufweist. Die vorgenannten Ausbildungen der Erfassungsmittel weisen jeweils eine geringe Störanfälligkeit auf. Dennoch ist unter den besonders schwierigen Einsatzbedingungen in einer Behandlungsstraße eine Fehlerkennung nicht ausschließbar. Die Kombination von zwei oder mehr Erfassungsmitteln mit unterschiedlicher Bauart, insbesondere mit einer der vorgenannten Ausbildungen, kann die Erkennungsgenauigkeit und die Ausfallsicherheit erhöhen, insbesondere da die verschiedenen Ausbildungen auf Basis unterschiedlicher physikalischer Vorgänge und Wirkungen arbeiten. Es können auch Erfassungsmittel mit einer anderen Ausbildung eingesetzt werden, die vorliegend nicht erläutert wird. Beispielsweise können zwei oder mehr Erfassungsmittel und insbesondere alle Erfassungsmittel einer Gruppe als induktive Sensoren oder Induktionsschleifen ausgebildet sein, um die Anwesenheit eines Fahrzeugs zu detektieren. Derartige Induktionsschleifen werden in der Praxis beispielsweise zur Erkennung der Anwesenheit eines Fahrzeugs vor einer Schranke oder einer Ampel verwendet.

Eine Behandlungsstraße gemäß der vorliegenden Offenbarung ist zur Oberflächenbehandlung von Fahrzeugen und insbesondere als Autowaschstraße ausgebildet. Sie umfasst bevorzugt mehrere Behandlungseinrichtungen, die jeweils über ein oder mehrere Behandlungsaggregate verfügen können. Die Behandlungsstraße weist eine Schleppvorrichtung mit mehreren Mitnehmern auf, die dazu ausgebildet sind, ein zu behandelndes Fahrzeug unter Anlage eines Fahrzeugrades an einen Mitnehmer durch die Behandlungsstraße zu bewegen. Die Behandlungseinrichtungen sind bevorzugt entlang der Schleppeinrichtung angeordnet, sodass ein Fahrzeug durch die Bewegung der Schleppeinrichtung an den Behandlungseinrichtungen vorbeigeführt wird. Die Behandlungsstraße weist die Erkennungsvorrichtung gemäß der vorliegenden Offenbarung auf.

Darüber hinaus kann die Behandlungsstraße eine Konturerfassung aufweisen, die beliebig ausgebildet sein kann, insbesondere gemäß der EP 2 082 930 A1 als optische Abtastvorrichtung mit integrierter Entfernungsmessung, oder gemäß der EP 1 795 409 A2 als Scaneinrichtung bzw. Laserscanner. Alternativ oder zusätzlich sind andere Ausbildungen der Konturerfassung möglich, beispielsweise in Form eines Lichtgitters.

Die Konturerfassung erfasst ein für ein zu behandelndes Fahrzeug die relativen Abstände der wesentlichen Konturbereiche des Fahrzeugs. Auf Basis dieser Abstände oder Konturbereiche können die verschiedenen Behandlungseinrichtungen und deren Behandlungsaggregate gesteuert werden. Insbesondere ist zwischen einer Position des Fahrzeugs und einer entsprechenden Position einer vorderen Grenzkontur, einer hinteren Grenzkontur, eines Bezugspunkts an einem Fahrzeugrad oder einem beliebigen anderen wesentlichen Konturbereich infolge der Abstände eine direkte Umrechnung möglich.

Ein weiterer Aspekt der vorliegenden Offenbarung, der für sich allein oder in Kombination mit den anderen Aspekten nutzbar ist, sieht vor, dass eine Steuerung der Behandlungsstraße und/oder die Auswerteeinrichtung der Erkennungsvorrichtung einen Zustandsschätzer aufweist. Der Zustandsschätzer kann auf Basis einer Soll-Position für ein Fahrzeug einen Erwartungswert für die Erfassungsdaten eines oder mehrerer Erfassungsmittel berechnen. Mit anderen Worten kann der Zustandsschätzer eine Prognose oder Antizipation vornehmen und ermitteln, welche Erfassungsdaten von den ein oder mehreren Erfassungsmitteln zu erwarten wären, wenn das Fahrzeug annahmekonform durch die Behandlungsstraße bewegt wird, d.h. wenn der anliegende Kontakt zwischen einem Fahrzeugrad des Fahrzeugs und einem Mitnehmer an der Schleppvorrichtung aufrechterhalten wird. Dementsprechend kann eine Abweichung eines Fahrzeugs von einer Soll-Position festgestellt werden, wenn die Erfassungsdaten der ein oder mehreren Erfassungsmittel in unzulässiger Weise von dem Erwartungswert abweichen.

Ein weiterer Aspekt der vorliegenden Offenbarung, der für sich allein oder in Kombination mit den anderen Aspekten nutzbar ist, sieht vor, dass der Behandlungsvorgang in einem Sicherheitsbetrieb fortgesetzt wird, wenn eine Abweichung eines Fahrzeugs von einer Soll-Position festgestellt wird. Ein Sicherheitsbetrieb kann beliebig definiert sein. Er kann insbesondere verschärfte Sicherheitstoleranzen für die verschiedenen Behandlungseinrichtungen und/oder deren Behandlungsaggregate vorsehen. Wenn im weiteren Verlauf wieder die Anwesenheit des Fahrzeugs an der Soll-Position festgestellt wird, kann der Sicherheitsbetrieb beendet und erneut der Normalbetrieb fortgesetzt werden.

Eine besonders bevorzugte Variante sieht vor, dass bei Abweichung eines Fahrzeugs von einer Soll-Position auf Basis der bekannten relativen Abstände der wesentlichen Konturbereiche dieses Fahrzeugs und der bekannten Anordnung und Bewegung der Mitnehmer an der Schleppvorrichtung die nächste wahrscheinliche Anlage zwischen einem Fahrzeugrad dieses Fahrzeugs und einem Mitnehmer ermittelt wird. Auf Basis dieser nächsten wahrscheinlichen Anlage kann eine neue Referenz-Position zwischen dem Fahrzeug und dem Fördermittel erfasst oder geschätzt und somit eine neue Soll-Position für das Fahrzeug festgelegt werden. Die neue Soll-Position kann anschließend zur entsprechend geänderten Steuerung der im weiteren Verlauf des Behandlungsvorgangs betroffenen Stationen bzw. Behandlungseinrichtungen und deren Behandlungsaggregate genutzt werden. Mit anderen Worten kann bei Feststellung einer Abweichung eines Fahrzeugs von einer Soll-Position eine neue Soll-Position erfasst werden, auf deren Basis der Behandlungsvorgang fortgesetzt wird.

Die Fortsetzung des Behandlungsvorgangs kann ggf. davon abhängig gemacht werden, ob ein unzulässiges Risiko einer Kollision zwischen benachbarten Fahrzeugen besteht. Hierzu kann insbesondere auf Basis der bekannten relativen Abstände der wesentlichen Konturbereiche von zwei benachbarten Fahrzeugen und zumindest einer neu festgelegten Soll-Position dieser Fahrzeuge der wahrscheinliche Fahrzeugabstand ermittelt werden. Wenn dieser einen vorgegebenen Mindestabstand unterschreitet, wird der Behandlungsvorgang unterbrochen. Andernfalls kann der Behandlungsvorgang auf Basis der neu festgelegten Soll-Position fortgesetzt werden.

Die Festlegung einer neuen Soll-Position kann ggf. mehrfach während eines Behandlungsvorgangs durchgeführt werden.

Weitere vorteilhafte Ausbildungen der Erfindung sind in den Unteransprüchen, den beigefügten Zeichnungen und der nachfolgenden Beschreibung angegeben.

Die Erfindung ist in den Zeichnungen beispielshaft und schematisch dargestellt. Es zeigen:
- Figur 1:: eine schematische Draufsicht auf eine Behandlungsstraße mit einer Erkennungsvorrichtung gemäß der vorliegenden Offenbarung;
- Figur 2:: eine schematische Seitenansicht einer Fahrzeugkontur;
- Figur 3:: eine Erläuterungsdarstellung zur Festlegung einer neuen Soll-Position eines Fahrzeugs während eines Behandlungsvorgangs;
- Figur 4 und 5:: eine Schemadarstellung einer Gruppe mit Erfassungsmitteln in Form von Zustandssensoren, die mit Kontaktierungselementen an einer Schleppvorrichtung zusammenwirken;
- Figur 6:: eine Schemadarstellung zur Änderung der aufgenommenen Lichtintensität an einem flächigen Lichtaufnehmer beim Überfahren durch ein Fahrzeug;
- Figur 7:: einen schematischen Verlauf der Erfassungsdaten bzw. der aufgenommenen Lichtintensität an dem Lichtaufnehmer gemäß Figur 6;
- Figur 8:: eine schematische Darstellung von Erfassungsmitteln in Form von fluidgefüllten elastischen Hohlkörpern beim Überfahren durch ein Fahrzeugrad.

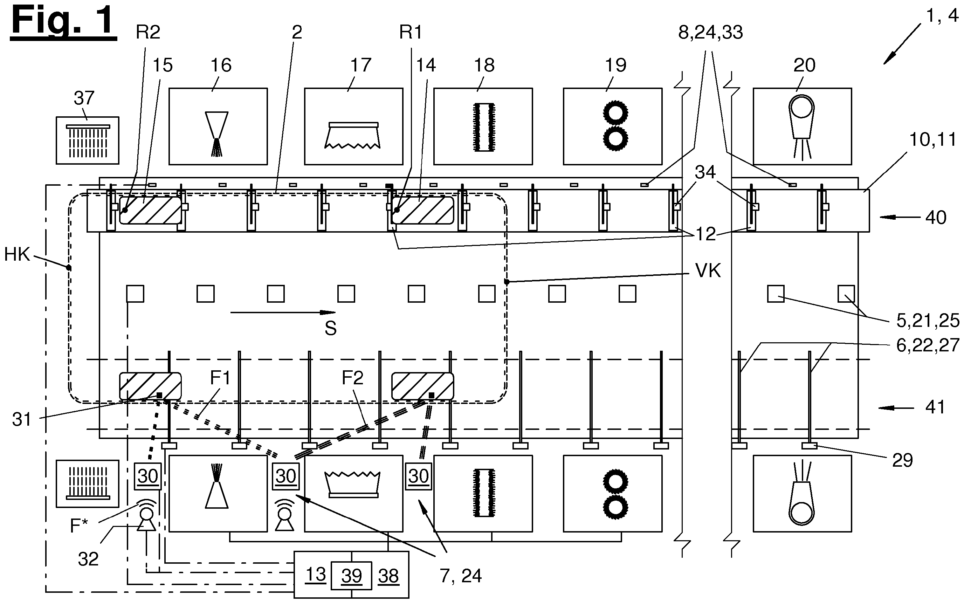

Figur 1 zeigt eine schematische Darstellung der Erkennungsvorrichtung und eine Behandlungsstraße gemäß der vorliegenden Offenbarung in Draufsicht. Die Behandlungsstraße (1) verfügt über ein angetriebenes Fördermittel zur Fremd-Bewegung mindestens eines Fahrzeugs (2) durch die Behandlungsstraße. Das Fördermittel kann beliebig ausgebildet sein. Es ist bevorzugt eine Schleppvorrichtung (10). Die Schleppvorrichtung (10) kann ein beliebig geformtes Schleppmittel (11) und mehrere Mitnehmer (12) aufweisen. Die Mitnehmer (12) sind in bekannten und bevorzugt in einheitlichen Abständen angeordnet. Die Abstände können beispielsweise 1,5 m oder 3 m betragen. Alternativ sind beliebige andere Abstände möglich. In dem Beispiel von Figur 1 sind erhebliche geringere Abstände von beispielsweise 0,5 m vorgesehen.

Die Behandlungsstraße (1) verfügt in dem gezeigten Beispiel über insgesamt fünf Behandlungseinrichtungen (16) bis (20). Alternativ kann eine beliebige andere Zahl an Behandlungseinrichtungen vorgesehen sein. Die erste Behandlungseinrichtung (16) ist eine Hochdruckreinigungsstation, die beispielsweise zwei oder mehr Sprühbalken aufweist, die stationär oder beweglich angeordnet sein können. Die zweite Behandlungseinrichtung (17) ist als Räderwäsche ausgebildet. Die dritte Behandlungseinrichtung (18) ist als in Horizontalrichtung orientierte Waschbürste ausgebildet, die bevorzugt durch eine Zustellvorrichtung in Kontakt mit der Oberfläche des zu behandelnden Fahrzeugs (2) gebracht wird. Die vierte Behandlungseinrichtung (19) umfasst zwei oder mehr Seitenwaschbürsten, die ebenfalls durch eine Zustelleinrichtung in Kontakt mit der Oberfläche des zu behandelnden Fahrzeugs (2) gebracht werden können. Die dritte und vierte Behandlungseinrichtung (18, 19) können jeweils eine Momentenzustellung oder separate Konturerfassungsmittel aufweisen. Bei einer Momentenzustellung wird eine Anpresskraft oder ein Anpressdruck der Bürste gegen die Oberfläche des Fahrzeugs ermittelt und auf einen vorgegebenen Wert gesteuert oder geregelt. Der Anpressdruck kann insbesondere über ein Lastmoment des Drehantriebs der jeweiligen Bürste ermittelt werden. Die Zustellposition ergibt sich somit aus dem Kontakt zwischen Bürste und Fahrzeugoberfläche. Gleichzeitig kann die momentane Zustellposition einer Behandlungsbürste gemessen oder auf andere Weise erfasst werden. Die Zustellposition ist eine Position der Bürste im Kontakt mit dem Fahrzeug (2). Entsprechend ist die Zustellposition eines Behandlungsaggregats eine Position in einem erwünschten Wirkabstand zum Fahrzeug (2), in der die Behandlung korrekt und störungsfrei ausführbar ist.

Die fünfte Behandlungseinrichtung (20) ist als Trocknungseinrichtung ausgebildet und umfasst beispielsweise zwei oder mehr bewegliche oder stationär angeordnete Gebläse und/oder Strahldüsen. Die Trocknungseinrichtung kann eine oder mehrere Zustellvorrichtungen zur Zustellung der Trocknungsaggregate aufweisen.

In dem Beispiel von Figur 1 wird ein Fahrzeug (2) durch die Schleppvorrichtung (10) bewegt. Die Bewegung des Fahrzeugs (2) ist eine Fremd-Bewegung, da sie - bei bestimmungsgemäßem Betrieb - durch einen Antrieb der Behandlungsstraße bzw. des Fördermittels ausgelöst und vorgegeben wird. Das linke vordere Fahrzeugrad (14) steht hierzu in anliegendem Kontakt mit einem Mitnehmer (12) der Schleppvorrichtung (10). Das hintere linke Fahrzeugrad (15) befindet sich ebenfalls in der Schleppspur (40), steht aber im gezeigten Zustand nicht in Kontakt mit einem Mitnehmer. Die rechten Fahrzeugräder befinden sich auf einer Nebenspur (41).

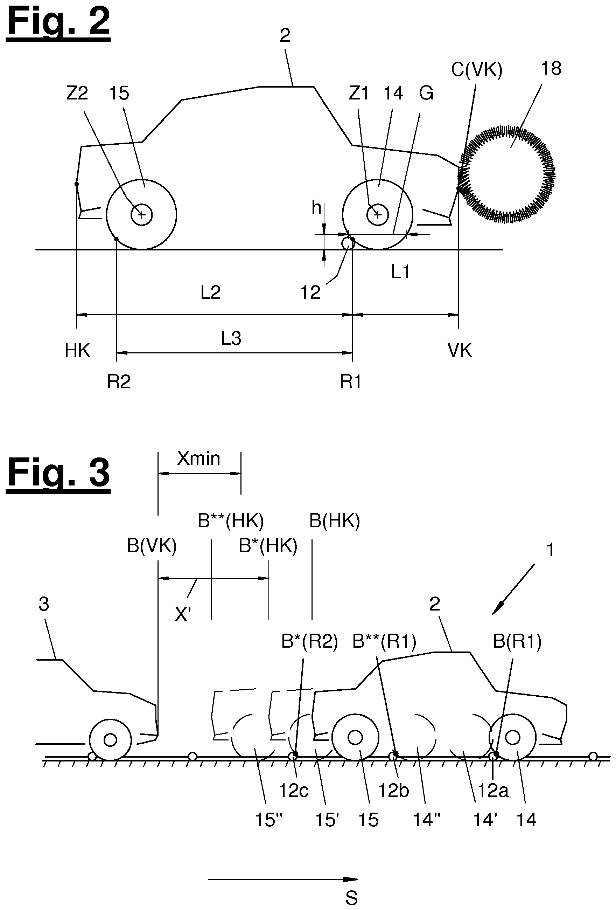

Im Eingangsbereich der Behandlungsstraße (1) ist eine Konturerfassung (37) angeordnet, die eine beliebige Ausbildung haben kann. Figur 2 zeigt beispielhaft, welche Daten über die Fahrzeugkontur bevorzugt durch die Konturerfassung (37) ermittelt werden. In dem gezeigten Beispiel wird eine zweidimensionale vertikale Höhenkontur ermittelt. Dies kann beispielsweise durch einen Strahlenvorhang oder ein Lichtgitter geschehen, an dem das Fahrzeug (2) vorbeibewegt wird. Alternativ oder zusätzlich kann eine zweidimensionale horizontale Höhenkontur erfasst werden, beispielsweise durch ein Lichtschnittverfahren.

Gegebenenfalls können mehrere horizontale Höhenkonturen auf unterschiedlichen Höhenebenen erfasst sein. Wiederum alternativ und bevorzugt kann eine dreidimensionale Höhenkontur erfasst werden. In der Praxis sind diverse Technologien für die Konturerfassung und die Ermittlung von zweidimensionalen oder dreidimensionalen Höhenkonturen bekannt.

Für die vorliegende Offenbarung sind besonders eine vordere Grenzkontur (VK), eine hintere Grenzkontur (HK) und jeweils ein oder mehrere Bezugspunkte (R1, R2, Z1, Z2) an den Fahrzeugrädern (14, 15) sowie die dazwischenliegenden Abstände (L1 bis L3) relevant. Alternativ oder zusätzlich können andere wesentliche Konturbereiche der Fahrzeuge (2, 3) und die dazwischenliegenden Abstände erfasst werden.

Besonders bevorzugt wird für ein oder jedes Fahrzeugrad (14, 15) auf einer bekannten Höhe (h) über der Reifenaufstandsfläche eine Sehnenlänge (G) zwischen der vorderen und hinteren Radflanke ermittelt. Aus der Höhe (h) und der Sehnenlänge (G) sowie der bekannten Geometrie der Mitnehmer (12) können dann der Achsmittelpunkt (Z1) sowie der Anlagepunkt (R1) gegenüber dem Mitnehmer (12) berechnet werden.

Sobald die momentane Position eines wesentlichen Konturbereichs (HK, VK, R1, R2, Z1, Z2) ermittelt ist, kann hieraus die momentane Position (A) des Fahrzeugs sowie der jeweils anderen wesentlichen anderen Konturbereiche berechnet werden und umgekehrt. In dem Beispiel von Figur 2 ist dargestellt, dass auf Basis der momentanen Position einer horizontalen Waschbürste der dritten Behandlungseinrichtung (18), die über ein separates Messmittel der Behandlungseinrichtung (18) erfasst wird, die momentane Position (C) (VK) der vorderen Grenzkontur (VK) ermittelt wird. In den weiteren Figuren sind diverse Beispiele für die Ermittlung anderer wesentlicher Konturbereiche (R1, R2, Z1, Z2) erläutert.

Während des Waschvorgangs wird bevorzugt eine Soll-Position (B) eines Fahrzeugs (2,3) aus der Bewegung der Schleppvorrichtung (10) der Behandlungsstraße (1) und einer Startposition (A0) des Fahrzeugs (2,3) zu Beginn eines Behandlungsvorgangs ermittelt. Die Startposition (A0) kann insbesondere durch die Konturerfassung (37) bestimmt werden. Die Startposition (A0) kann die oben genannte anfängliche Referenz-Position des Fahrzeugs (2) gegenüber dem Fördermittel und/oder eine absolute anfängliche Position des Fahrzeugs (2) umfassen.

Die Soll-Position (W) kann von der Auswerteeinrichtung (13) der Erkennungsvorrichtung (4) bezogen werden. Alternativ oder zusätzlich kann die Auswerteeinrichtung (13) die Soll-Position (B) eigenständig ermitteln, insbesondere auf Basis der bekannten oder vorgegebenen Bewegung des Fördermittels und der anfänglichen oder neu erfassten Referenz-Position des Fahrzeugs (2) gegenüber dem Fördermittel.

In dem Beispiel von Figur 1 ist die Auswerteeinrichtung (13) als separate Einrichtung vorgesehen, die getrennt von einer Steuerung (38) der Behandlungsstraße (1) vorliegt. Dies ist beispielsweise dann der Fall, wenn die Erkennungsvorrichtung gemäß der vorliegenden Offenbarung an einer bestehenden Behandlungsstraße (1) nachgerüstet wird. Alternativ kann die Auswerteeinrichtung (13) oder deren Funktionalität in eine Steuerung (38) einer Behandlungsstraße (1) integriert sein, insbesondere bei Neuanlagen. Ferner kann der oben erwähnte Zustandsschätzer (39) Bestanteil der Auswerteeinrichtung (13) und/oder einer Steuerung (38) der Behandlungsstraße (1) sein.

Im Rahmen der vorliegenden Offenbarung werden verschiedene Funktionalitäten erläutert, die den Fortgang des Behandlungsverfahrens beeinflussen können. Hierzu zählen insbesondere Ausführungsschritte eines Erkennungsverfahrens oder eines Überwachungsverfahrens, das durch die Erkennungsvorrichtung (4) bzw. die Auswerteeinrichtung (13) ausführbar sind. Ferner zählen hierzu Ausführungsschritte eines Fahrzeugbehandlungsverfahrens oder Steuerungsverfahrens zur Betätigung der Waschstraße (1) bzw. der ein oder mehreren Behandlungseinrichtungen (16 bis 20).

Diese Funktionen bzw. Ausführungsschritte können jeweils einzeln oder in beliebiger Kombination Bestandteil der vorgenannten Verfahren sein. Andererseits können die Auswerteeinrichtung (13), die Steuerung (38) der Behandlungsstraße und/oder der Zustandsschätzer (39) jeweils einzeln oder in Kombination dazu ausgebildet sein, diese Funktionalitäten oder Ausführungsschritte durchzuführen.

Aus Gründen der vereinfachten Darstellung wird nachfolgend auf eine konkrete Zuweisung der jeweiligen Funktionalitäten oder Ausführungsschritte zu der Auswerteeinrichtung (13), der Steuerung (38) oder dem Zustandsschätzer (39) verzichtet.

Die Erkennungsvorrichtung (4) bzw. die Behandlungsstraße (1) gemäß dem Beispiel von Figur 1 umfasst insgesamt vier Gruppen (5, 6, 7, 8) von Erfassungsmitteln (21, 22, 23, 24), die jeweils für sich allein oder in beliebiger Kombination vorliegen können.

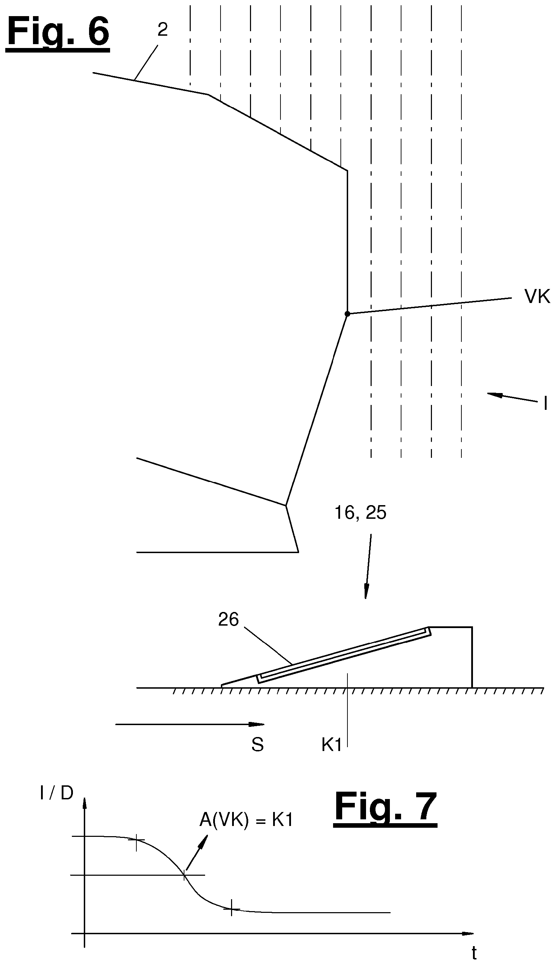

Eine erste Gruppe (5) von Erfassungsmitteln (21) ist durch flächige Lichtaufnehmer (25) gebildet, die im Bodenbereich der Behandlungsstraße (1) angeordnet sind. Figur 6 zeigt eine schematische Seitenansicht auf einen solchen flächigen Lichtaufnehmer (25). Ein vorderer Bereich und insbesondere eine vordere Grenzkontur (VK) eines zu behandelnden Fahrzeugs (2) wird in einer Längsrichtung (S) über den flächigen Lichtaufnehmer (25) bewegt. Hierdurch wird der Lichtaufnehmer (25) nach und nach durch das Fahrzeug bzw. dessen vorderer Kontur überdeckt. In der Behandlungsstraße (1) kann eine beliebige Anzahl und Anordnung von Lichtquellen vorliegen. Die flächigen Lichtaufnehmer werden dementsprechend mit einer bestimmten Lichtintensität beaufschlagt. Ferner kann Fremdlicht von zu behandelnden Fahrzeugen oder von außen auf einen Lichtaufnehmer (25) auftreffen. Wenn ein Lichtaufnehmer durch eine vordere Kontur eines bewegten Fahrzeugs (2) überdeckt wird, wird er zumindest teilweise beschattet, so dass eine Verminderung der aufgenommenen Lichtintensität (I) erfasst wird. Der Gradient der Verminderung (Änderung der Lichtintensität pro Zeiteinheit) bzw. die Dauer der Verminderung, die durch die Beschattung bzw. Überdeckung hervorgerufen wird, können in einem bekannten oder ermittelbaren Zusammenhang mit der Bewegungsgeschwindigkeit der Schleppvorrichtung (10) bzw. des Fahrzeugs (2) stehen. Die vorgenannten Werte können beispielsweise durch Test oder durch Lernverfahren ermittelt werden. Dies gilt entsprechend umgekehrt für eine Erhöhung der aufgenommenen Lichtintensität, wenn eine hintere Kontur und insbesondere eine hintere Grenzkontur (HK) eines Fahrzeugs (2,3) einen Lichtaufnehmer (25) passiert.

Dementsprechend kann das Überdecken eines Lichtaufnehmers oder das Passieren eines Lichtaufnehmers auf Basis einer Verminderung oder Erhöhung der aufgenommenen Lichtintensität (I) ermittelt werden. Die Auswerteeinrichtung (13) kann aus dem Überdecken oder Passieren eines Lichtaufnehmers entsprechend die momentane Position (A) eines Fahrzeugs (2,3) und/oder eine Abweichung eines Fahrzeugs (2,3) von einer Soll-Position (B) ermitteln.

Die vorgenannten Ermittlungen können auf Basis beliebiger Analysemethoden ausgeführt werden. Beispielsweise kann gemäß dem Beispiel in Figur 7 eine Verringerung der aufgenommenen Lichtintensität (I) gemäß den Erfassungsdaten (D) eines flächigen Lichtaufnehmers (25), insbesondere einer Solarzelle, ermittelt werden. Gegebenenfalls kann die erfasste Verminderung nur dann zur weiteren Auswertung zugelassen werden, wenn sie bestimmte Kriterien erfüllt. So kann beispielsweise ein Zulässigkeitsbereich für einen Gradienten der Verminderung vorgegeben sein, oder ein Zulässigkeitsbereich für die Dauer der Verminderung oder ein Zulässigkeitsbereich für die proportionale oder absolute Änderung der Lichtintensität (I). Auch Kombinationen der vorgenannten Kriterien sind möglich.

An einem Mittelpunkt der Verminderung und/oder an einem Punkt mit der größten Steigung innerhalb der Verminderung kann festgestellt werden, dass sich die vordere Grenzkontur (VK) oberhalb des flächigen Lichtaufnehmers (25) befindet. Es kann entsprechend angenommen werden, dass zu diesem Zeitpunkt die momentane Position (A) (VK) der vorderen Grenzkontur (VK) gleich der bekannten Position (K1) des Lichtaufnehmers (25) in Längsrichtung (S) der Behandlungsstraße ist.

Die Rezeptorfläche (26) des Lichtaufnehmers (25) ist bevorzugt gegenüber der Horizontalebene geneigt oder weist eine gekrümmte Form auf, sodass auf der Rezeptorfläche (26) aufgetragene Fremdstoffe zur Seite hin ablaufen. Alternativ oder zusätzlich kann eine Spülvorrichtung vorgesehen sein, die die Rezeptorfläche (26) intermittierend oder dauerhaft von Ablagerungen reinigt. Die Spülvorrichtung kann beispielsweise einen Flüssigkeitsschwall über die Rezeptorfläche (26) leiten und/oder einen Gasstrahl auf die Rezeptorfläche (26) applizieren.

Eine zweite Gruppe (6) der in Figur 1 dargestellten Erfassungsmittel (22) ist als flexibler Hohlkörper (27) ausgebildet. Ein oder mehrere der Hohlkörper (27) sind fluidleitend mit einem Sensor (29), insbesondere einen Drucksensor oder Strömungssensor verbunden. Die Hohlkörper (27) sind bevorzugt an bzw. auf einer Nebenspur (41) der Behandlungsstraße (1) angeordnet, d.h. in dem Bereich, in dem Fahrzeugräder bewegt werden, die nicht in Kontakt mit der Schleppvorrichtung (10) bzw. der Mitnehmer (12) stehen. Wenn sich die Schleppvorrichtung (10) auf der linken Seite der Behandlungsstraße (1) befindet, ist die Nebenspur (41) derjenige Bereich, auf den die rechten Fahrzeugräder (41) abrollen.

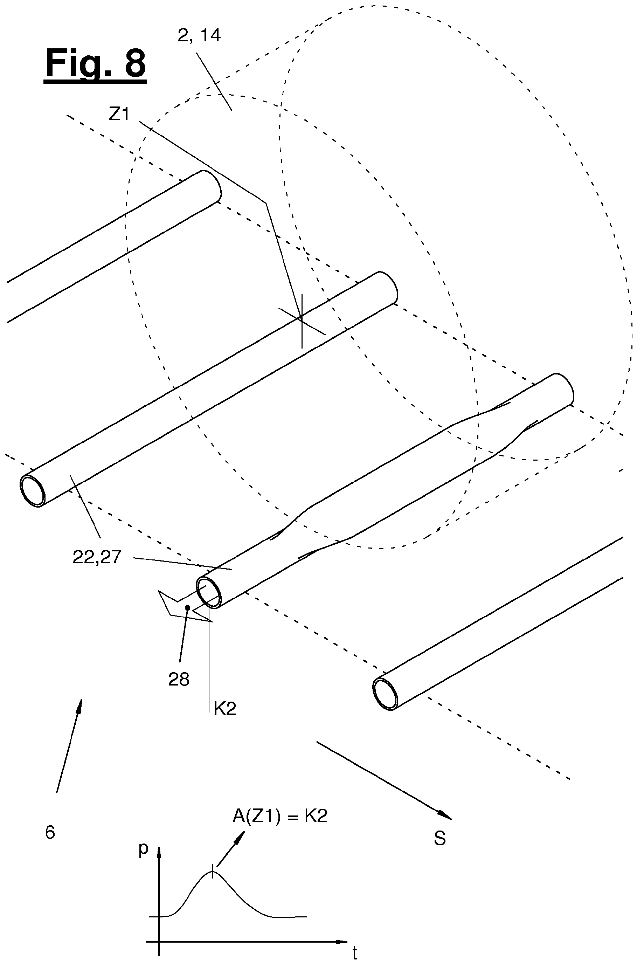

Figur 8 zeigt eine Detailansicht auf die flexiblen Hohlkörper (27). In dem Beispiel sind die Hohlkörper (27) als flexible Schläuche ausgebildet, was eine bevorzugte Ausführungsvariante darstellt. Alternativ kann eine andere Körperform vorgesehen sein, beispielsweise eine Quaderform oder prismatische Form.

Wenn ein Fahrzeugrad (14) über einen flexiblen Hohlkörper (27) bewegt wird, wird dieser verformt, wobei das in dem Hohlkörper (27) enthaltene Fluid (28) komprimiert oder verdrängt wird. Dementsprechend kann an den Sensor (29) eine Erhöhung des Fluiddrucks oder eine ausströmende Fluidbewegung erfasst werden. Wenn das Fahrzeugrad (14) den Hohlkörper (27) passiert hat, kann sich dieser in Richtung seiner Ausgangsform zurückverformen, so dass die Kompression des Fluids zurückgeht und/oder eine einströmende Fluidbewegung feststellbar ist.

Die Auswerteeinrichtung (13) ist entsprechend dazu ausgebildet, das Überfahren eines flexiblen Hohlkörpers (27) durch eine Änderung des Fluidzustands zu ermitteln. Beispielsweise kann zu dem Zeitpunkt, zu dem ein maximaler Fluiddruck oder eine maximale Fluidverdrängung festgestellt wird, erfasst werden, dass die momentane Position (A(Z1)) eines Fahrzeugrades (14) gleich der Position (K2) des Hohlkörpers (27) entlang der Längsrichtung (S) der Behandlungsstraße (1) ist. Alternativ kann eine beliebige andere Analysemethode genutzt werden.

Eine dritte Gruppe (7) von Erfassungsmitteln (23) ist in dem Beispiel von Figur 1 als Funk-Empfänger (30) ausgebildet. Jeder der Funk-Empfänger (30) kann das Funksignal (F1, F2) eines Reifeninnendrucksensors (31) empfangen, der sich in einem Fahrzeugrad (14, 15) befindet. Ferner kann jeder der Funk-Empfänger (30) die Intensität ermitteln, bei der das Funksignal (F1, F2) empfangen wird, sowie den exakten Zeitpunkt des Empfangs. Aus Unterschieden zwischen den ermittelten Intensitäten und/oder Empfangszeitpunkten an zwei oder mehr Funk-Empfängern (30) kann nach bekannten Triangulationsmethoden oder sonstigen Auswerteverfahren die momentane Position (A) eines Reifeninnendrucksensors (31) bzw. des entsprechenden Fahrzeugrads (14, 15) ermittelt werden. Die Funksignale (F1, F2) von Reifeninnendrucksensoren enthalten in der Regel eine Signalkodierung, die auch als TPMS-Kennung (TPMS = Tire Pressure Measurement System) bezeichnet wird. Die Funk-Empfänger und/oder die Auswerteeinrichtung (13) sind bevorzugt dazu ausgebildet, ein Funksignal (F1, F2) eines bestimmten Reifeninnendrucksensors (31) anhand dieser Signalkodierung zu identifizieren. Ferner können ein oder mehrere Funktrigger (32) vorgesehen sein, die ein Auslösesignal (F*) emittieren, um das Versenden des Funksignals (F1, F2) von einem Reifeninnendrucksensor (31) zu veranlassen. Die Ausbildung der Funk-Empfänger (30) und Funktrigger (32) können auf den bekannten Normen für TPMS-Systeme beruhen, so dass eine Kompatibilität zu einer möglichst großen Zahl von Reifeninnendrucksensoren (31) erreicht wird.

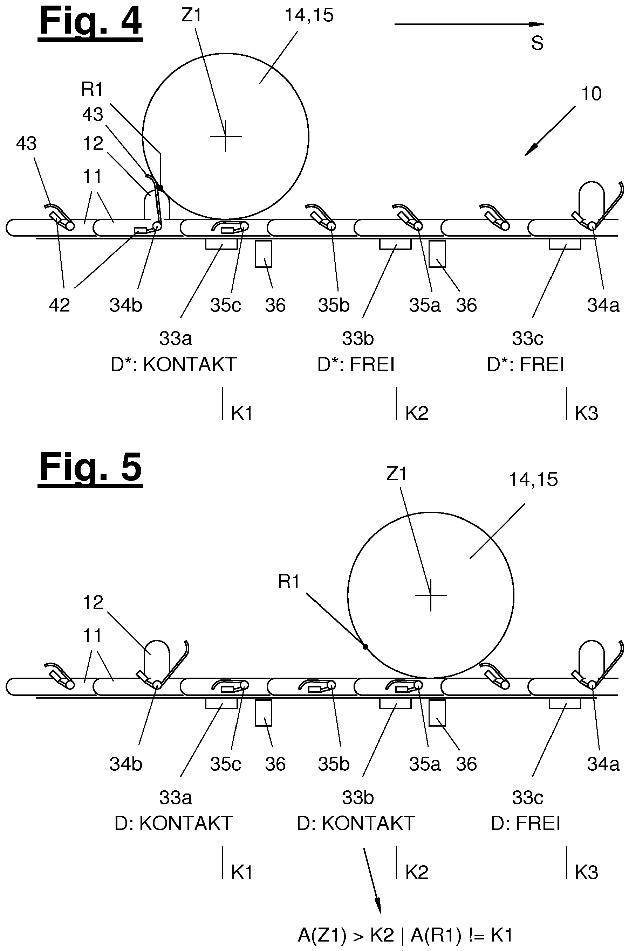

Eine vierte Gruppe (8) von Erfassungsmitteln (24) ist in dem Beispiel von Figur 1 als Zustandssensoren (33) ausgebildet, die mit Kontaktierungselementen (34, 35) an der Schleppvorrichtung (10) zusammenwirken. Figuren 4 und 5 beinhalten eine schematische Seitenansicht auf derartige Erfassungsmittel (24).

Die Kontaktierungselemente (34, 35) können zumindest zwei Zustände (FREI/KONTAKT) haben. In dem Beispiel von Figuren 4 und 5 sind Kontaktierungselemente (34, 35) mit unterschiedlicher Bauart gezeigt. Nach der ersten Bauart ist ein Kontaktierungselement (34) gemäß einer Tastfunktion ausgebildet. Es gibt an, ob momentan ein anliegender Kontakt zwischen dem Kontaktierungselement (34) und einem Fahrzeugrad (14, 15) vorliegt. Mit anderen Worten wird das Kontaktierungselement (34) bei Anlage eines Fahrzeugrads (14, 15) von einem ersten Zustand (FREI) in einen zweiten Zustand (KONTAKT) versetzt. Wenn ein Verlust der Anlage eines Fahrzeugrades (14, 15) zu dem Kontaktierungselement (34) eintritt, versetzt sich das Kontaktierungselement (34) selbsttätig in den ersten Zustand frei zurück. Die Kontaktierungselemente (34) dieser ersten Bauart sind bevorzugt an oder in den Mitnehmern (12) der Schleppvorrichtung (10) angeordnet.

Die Kontaktierungselemente (35) gemäß der zweiten Bauart haben eine semi-stabile oder bi-stabile Schaltfunktion. Sie werden bei einer Anlage eines Fahrzeugrades (14, 15) an das jeweilige Kontaktierungselement (35) von einem ersten Zustand (FREI) in einen zweiten Zustand (KONTAKT) versetzt. Nachfolgend halten sie diesen Zustand, bis das Kontaktierungselement (34) durch externe Einwirkungen in den ersten Zustand (FREI) zurückversetzt wird. Dementsprechend kann über Abfrage der Zustände von mehreren benachbarten Kontaktierungselementen (35) der zweiten Bauart abgeschätzt werden, wie weit sich ein Fahrzeugrad (14, 15) etwaig von seiner Soll-Position (B) entfernt hat. Dies wird nachfolgend auf Basis eines Vergleichs der Figuren 4 und 5 erläutert.

Der Zustand gemäß Figur 4 ist der Zustand, der gemäß der Soll-Position (B) des Fahrzeugrades (14,15) bzw. der Bezugspunkte (R1, Z1) vorliegen sollte. Figur 5 zeigt einen davon abweichenden tatsächlichen Zustand. Hier befindet sich das Fahrzeugrad (14, 15) nicht mehr in Anlage mit dem Mitnehmer (12), sondern ist in der Längsrichtung (S) versetzt. Ein solcher Zustand kann beispielsweise eintreten, wenn ein Fahrzeug durch seinen Eigenantrieb innerhalb der Behandlungsstraße (1) bewegt wird, was beispielsweise auf Grund einer Fehlbedienung geschehen kann.

Neben oder unter der Schleppvorrichtung (10) sind mehrere Zustandssensoren (33) angeordnet, die hier beispielhaft als Magnetsensoren ausgebildet sind. Jedes der Kontaktierungselemente (34, 35) umfasst einen Kontaktarm und einen Magnetarm, die gemeinsam um eine Schwenkachse bewegbar sind. In dem ersten Zustand (FREI) befindet sich ein Kontaktierungselement (34, 35) in einer solchen Drehlage, dass der Magnetarm (42) angehoben ist. An dem Magnetarm kann beispielsweise ein Permanentmagnet angeordnet sein. Der Kontaktarm (43) befindet sich in einer Stellung, in der über die Schleppvorrichtung (10), insbesondere Schleppkette oder ein Plattenband (11) oder einen Mitnehmer (12) hinausragt.

In dem zweiten Zustand (KONTAKT) befindet sich das Kontaktierungselement in einer solchen Drehlage, dass der Magnetarm (42) abgesenkt ist und der Kontaktarm (43) hinter eine Kontur der Schleppvorrichtung (10), insbesondere eines Plattenbands (11) oder eines Mitnehmers (12), eingedrückt ist.

Wenn der Magnetarm (42) in der abgesenkten Stellung ist, können die Zustandssensoren (33) die Anwesenheit des Magnetelements und somit den zweiten Zustand (KONTAKT) erfassen. Befindet sich der Magnetarm (42) in der angehobenen Position, wird hingegen durch einen Zustandssensor (33) der erste Zustand (FREI) erfasst. Die Erfassung findet bevorzugt jeweils dann statt, wenn sich ein Kontaktierungselement (34,35) über einem Zustandssensor (33) befindet.

Die Kontaktierungselemente (35) werden bevorzugt durch ein oder mehrere Rückstellelemente (36) in den ersten Zustand (FREI) zurückversetzt. Die Rückstellelemente (36) können beispielsweise als Elektromagnete oder Permanentmagnete ausgebildet sein, die eine umgekehrte Polrichtung zu den Magnetelementen an den Magnetarmen (42) aufweisen. Dementsprechend sind die Rückstellelemente (36) dazu ausgebildet, ein Kontaktierungselement in den ersten Zustand (FREI) zurückzuversetzen, wenn keine Anlage zwischen diesem Kontaktierungselement und einem Fahrzeugrad (14, 15) vorliegt.

In dem erwarteten Zustand gemäß Figur 4 sollten die Zustandssensoren (33a, 33b, 33c) die in Figur 4 angegebenen Zustände (KONTAKT, FREI) frei ermitteln. Der Zustandsschätzer (39) oder eine entsprechende Funktionalität der Auswerteeinrichtung (13) oder der Steuerung (38) kann entsprechend den jeweils angegebenen Erwartungswert (D*) für jeden der Zustandssensoren (33a, 33b, 33c) vorsehen. Wenn dies der Fall ist, wird keine Abweichung des Fahrzeugs (2) bzw. des Fahrzeugrads (14, 15) von der Soll-Position (B) ermittelt. Wenn jedoch von den Zustandssensoren (33a, 33b, 33c) ein oder mehrere Erfassungsdaten (D) vorliegen, die mit dem jeweiligen Erwartungswert (D*) nicht übereinstimmen, kann eine Abweichung des Fahrzeugs (2) bzw. des Fahrzeugrads (14, 15) von der Soll-Position (B) ermittelt werden. Dies ist beispielhaft in Figur 5 gezeigt. Hier befinden sich die Kontaktierungselemente (35a, 35b und 35c) im zweiten Zustand (KONTAKT). Allerdings wird nur für die Kontaktierungselemente (35a) und (35c) dieser Zustand erfasst.

Am Zustandssensor (33b) weichen die Erfassungsdaten (D = KONTAKT) von dem Erwartungswert (D* = FREI) ab. Am Zustandssensor (33c) und am Zustandssensor (33a) stimmen die Erfassungsdaten (D) und der Erwartungswert (D*) jedoch überein. Hieraus kann ermittelt werden, dass die momentane Position A(Z1) des Fahrzeugrads (14) jedenfalls in der Längsrichtung (S) von der Soll-Position abweichen muss, d.h. A(Z1) > K2. Ferner kann festgestellt werden, dass das Fahrzeugrad (14) noch nicht bis zur Position (K3) des Zustandssensors (33c) vorgedrungen ist.

Somit lässt sich aus den Erfassungsdaten (D) der Zustandssensoren (33, 33a bis 33c) und einem Vergleich gegenüber den Erwartungswerten (D*) eine Schätzung darüber treffen, wie weit und in welcher Richtung die momentane Position (A) des Fahrzeugs (2) von der Soll-Position (B) abweicht.

Nachfolgend wird unter Bezugnahme auf Figur 3 ein Behandlungsverfahren bzw. ein Steuerungsverfahren für die Behandlungsstraße (1) erläutert. Das Verfahren kann durch die Steuerung (38) der Behandlungsstraße (1), die Auswerteeinrichtung (13) und/oder den Zustandsschätzer (39) ausgeführt werden. Alternativ ist die Ausführung durch eine beliebig andere Vorrichtung möglich.

Figur 3 zeigt zwei benachbarte Fahrzeuge (2, 3) innerhalb der Behandlungsstraße (1). Das in der Längsrichtung (S) vordere Fahrzeug (2) ist mit durchgezogener Linie in der Soll-Position (B) dargestellt. Hier befindet sich ein Vorderrad (14) des Fahrzeugs (2) in anliegendem Kontakt mit einem ersten Mitnehmer (12a) der Schleppvorrichtung (10). In dem Beispiel von Figur 3 wird ferner angenommen, dass sich das Fahrzeug (2) relativ zur Schleppvorrichtung (10) entgegen der Längsrichtung (S) bewegt, beispielsweise weil das Fahrzeug (2) durch Betätigung der Bremsen verzögert oder gestoppt wird und der Mitnehmer (12a) unter dem Fahrzeugrad (14) durchrutscht.

Bei oder nach einer ersten Verzögerung des Fahrzeugs (2) kann eine Abweichung des Fahrzeugs (2) von der Soll-Position festgestellt werden. Dabei kann insbesondere auf Basis einer oder mehrerer Vergleiche zwischen Erwartungswerten (D*) und Erfassungsdaten (D) ermittelt werden, in welcher Richtung die Abweichung vorliegt, d.h. ob das Fahrzeug (2) mit oder entgegen der Längsrichtung (S) relativ zu der Schleppvorrichtung (10) bewegt worden ist.

In dem Beispiel von Figur 3 wird auf Basis der bekannten relativen Abstände (L1, L2) der Fahrzeugräder (14, 15) bzw. der dortigen Bezugspunkte unter bekannter Anordnung und Bewegung der Mitnehmer (12) ermittelt, das als nächstes ein Kontakt zwischen dem hinteren Fahrzeugrad (15) und dem Mitnehmer (12c) zu erwarten ist. Dies ist die nächste wahrscheinliche Anlage zwischen einem Fahrzeugrad und einem Mitnehmer der Schleppeinrichtung. Sie ist in Figur 3 als gestrichelte Position des hinteren Fahrzeugrads dargestellt und mit der Bezugsziffer 15' gekennzeichnet. Auf Basis des wahrscheinlichen Kontakts zwischen dem hinteren Fahrzeugrad (15') und der Position des Mitnehmers (12c) kann entsprechend eine neue Soll-Position (B*) für das Fahrzeug (2) festgelegt werden, auf deren Basis wiederum Soll-Positionen (B*) aller wesentlichen Konturbereiche berechenbar sind, insbesondere eine Soll-Position (B*) (HK) der hinteren Grenzkontur (HK).

Weiterhin ist gemäß den obigen Ausführungen die (ursprüngliche) Soll-Position (B) der vorderen Grenzkontur (VK) des Fahrzeugs (3) bekannt. Dementsprechend kann aus diesen Soll-Positionen ((B*) (HK) und B (VK)) der wahrscheinliche Fahrzeugabstand (X') zwischen den benachbarten Fahrzeugen (2, 3) ermittelt werden. Dieser wahrscheinliche Fahrzeugabstand (X') kann mit einem Mindestabstand (Xmin) verglichen werden. Für die erste neu festgelegte Soll-Position (B*) ist der gleiche Fahrzeugabstand (X') größer als der Mindestabstand (Xmin), sodass festgestellt wird, dass der Behandlungsvorgang auf Basis der neu festgelegten Soll-Position (B*) fortgesetzt werden kann. Weiterhin ist in Figur 3 ein Zustand gezeigt, bei dem das Fahrzeug (2) nochmals verzögert wird, sodass nun ein Kontakt zwischen dem Vorderrad (14) und dem Mitnehmer (12b) erwartet wird. Dieser Zustand des Vorderrads (14) ist durch die Bezugsziffer (14") gekennzeichnet. Auch für diese wahrscheinliche Anlage kann eine neue Soll-Position (B**) festgelegt werden, auf deren Basis die Soll-Positionen aller wesentlichen Konturbereiche und insbesondere die Soll-Position (B**(HK)) der hinteren Grenzkontur berechenbar sind. Nach dem zweiten Verzögern würde der wahrscheinliche Fahrzeugabstand (X') den Mindestabstand (Xmin) unterschreiten, sodass eine Unterbrechung des Behandlungsvorgangs erfolgt.

Abwandlungen der Erfindung sind in verschiedener Weise möglich. Insbesondere können die zu den Ausführungsbeispielen gezeigten, beschriebenen oder in sonstiger Weise offenbarten Merkmale beliebig miteinander kombiniert, oder gegeneinander ersetzt werden.

Ein oder mehrere Behandlungseinrichtungen (16) bis (20) können eigene Messmittel zur Bestimmung einer absoluten oder relativen Position (C) einer Fahrzeugkontur aufweisen (vgl. Figur 2). Eine Abweichung eines Fahrzeugs (2, 3) von einer Soll-Position (B) kann festgestellt werden, wenn die gemäß einem Messmittel einer Behandlungseinrichtung (16) bis (20) erfasste Position (C) in unzulässiger Weise von einem Erwartungswert abweicht, der auf Basis der Soll-Position (B) für diese Fahrzeugkontur berechnet ist.

Die Kontaktierungselemente (34, 35) können eine andere Ausbildung haben als oben beschrieben. Beispielsweise kann ein einzelner drehbarer Arm vorgesehen sein, der einen Kontaktierungsbereich zur etwaigen Anlage an einem Fahrzeugrad (14, 15) und ein Magnetelement aufweist. Anstelle eines Magnetelements kann ein beliebiger anderer Signalgeber vorgesehen sein. Die Zustandssensoren (33) können entsprechend eine andere Erfassungstechnik nutzen. Bevorzugt wird ein Zustand eines Kontaktierungselements (34, 35) berührungslos abgefragt.

Eine semi-stabile oder bi-stabile Schaltfunktion eines Kontaktierungselements (34, 35) kann auf beliebige Weise erreicht werden. In der Praxis sind verschiedene Ausbildungen bekannt, beispielsweise bi-stabile Federlagerungen. Anstelle einer mechanischen Umschaltung durch Bewegung des Kontaktierungselements kann eine logische oder elektronische Umschaltung vorgesehen sein. Dementsprechend kann ein Kontaktierungselement durch eine elektronische Schaltung oder in sonstiger Form ausgebildet sein.

### BEZUGSZEICHENLISTE

- 1: Behandlungsstraße / Wachstraße
- 2: Fahrzeug
- 3: Fahrzeug
- 4: Erkennungsvorrichtung
- 5: Erste Gruppe von Erfassungsmitteln
- 6: Zweite Gruppe von Erfassungsmitteln
- 7: Dritte Gruppe von Erfassungsmitteln
- 8: Vierte Gruppe von Erfassungsmitteln
- 9: Fahrbahn
- 10: Schleppvorrichtung
- 11: Schleppmittel / Kette / Plattenband
- 12: Mitnehmer
- 13: Auswerteeinrichtung
- 14: Erstes Fahrzeugrad / Vorderrad
- 15: Zweites Fahrzeugrad / Hinterrad
- 16: Erste Behandlungseinrichtung
- 17: Zweite Behandlungseinrichtung
- 18: Dritte Behandlungseinrichtung
- 19: Vierte Behandlungseinrichtung
- 20: Fünfte Behandlungseinrichtung
- 21: Erste Erfassungsmittel
- 22: Zweite Erfassungsmittel
- 23: Dritte Erfassungsmittel
- 24: Vierte Erfassungsmittel
- 25: Flächige Lichtaufnehmer / Solarzelle
- 26: Rezeptorfläche
- 27: Flexibler Hohlkörper
- 28: Fluid
- 29: Sensor / Drucksensor / Strömungssensor
- 30: Funk-Empfänger
- 31: Reifeninnendrucksensor / TPMS Transceiver
- 32: Funktrigger
- 33: Zustandssensor
- 34: Kontaktierungselement mit Tastfunktion
- 35: Kontaktierungselement mit semi-stabiler oder bistabiler Schaltfunktion
- 36: Rückstellelement
- 37: Konturerfassung / Lichtschranke / Strahlenvorhang / Laserscanner
- 38: Steuerung
- 39: Zustandsschätzer / Kalman-Filter
- 40: Schleppspur
- 41: Nebenspur
- 42: Magnetarm
- 43: Kontaktarm
- A: Momentane Position
- A0: Ausgangs-Position
- B: Soll-Position
- B*, B**: Neu gesetzte Soll-Position
- C: Position einer zu behandelnden Fahrzeugkontur gemäß Messmittel einer Behandlungseinrichtung
- D: Erfassungsdaten
- D*: Erwartungswert für Erfassungsdaten
- F1, F2...: Funksignal eines Reifeninnendrucksensors
- F*: Auslösesignal
- G: Sehnenlänge zwischen Radflanken
- h: Höhe über Reifenaufstandsfläche
- HK: Hintere Grenzkontur
- I: Lichtintensität
- K1, K2...: Bekannte Positionen von Erfassungsmitteln
- L1, L2: Abstände zwischen wesentlichen Konturbereicheneine Fahrzeugs
- p: Druck / Fluiddruck
- R1: Bezugspunkt erstes Fahrzeugrad / Anlagebereich zu Mitnehmer
- R2: Bezugspunkt zweite Fahrzeugrad / Anlagebereich zu Mitnehmer
- S: Längsrichtung
- t: Zeit
- VK: Vordere Grenzkontur
- X: Fahrzeugabstand
- X': Wahrscheinlicher Fahrzeugabstand
- Xmin: Mindestabstand
- Z1: Bezugspunkt erstes Fahrzeugrad / Radmittelpunkt / Längsposition der Achse
- Z2: Bezugspunkt zweites Fahrzeugrad / Radmittelpunkt / Längsposition der Achse

## Patentansprüche

1. Erkennungsvorrichtung zur Überwachung der Position von Fahrzeugen (2, 3) in einer Behandlungsstraße (1) während eines Behandlungsvorgangs, wobei die Fahrzeuge (2, 3) in der Behandlungsstraße (1) durch ein Fördermittel bewegbar sind, wobei die Erkennungsvorrichtung (4) mindestens eine Gruppe (5, 6, 7, 8) von Erfassungsmitteln (21, 22, 23, 24) und eine Auswerteeinrichtung (13) umfasst, wobei die Erfassungsmittel (21, 22, 23, 24) an bekannten Positionen (K1, K2) entlang der Behandlungsstraße (1) anordenbar und mit der Auswerteeinrichtung (13) verbunden sind, **dadurch gekennzeichnet, dass** die Auswerteeinheit (13) dazu ausgebildet ist, Erfassungsdaten (D) von mehreren Erfassungsmitteln (21, 22, 23, 24) zu beziehen und daraus die momentane Position (A) eines oder mehrerer Fahrzeuge (2, 3) innerhalb der Behandlungsstraße (1) und die Abweichung eines Fahrzeugs (2, 3) von einer Soll-Position (B) zu ermitteln, wobei
- zwei oder mehr Erfassungsmittel (21) und insbesondere alle Erfassungsmittel (21) einer Gruppe (5) als im Bodenbereich angeordnete flächige Lichtaufnehmer (25) ausgebildet sind, insbesondere als Solarzellen; UND/ODER wobei
- zwei oder mehr Erfassungsmittel (22) und insbesondere alle Erfassungsmittel (22) einer Gruppe (6) als im Bodenbereich angeordnete und mit einem Fluid (28) gefüllte flexible Hohlkörper (27) ausgebildet sind, die mit einem oder mehreren Sensoren (29) verbunden sind, insbesondere mit einem Drucksensor oder einem Strömungssensor; UND/ODER wobei
- zwei oder mehr Erfassungsmittel (23) und insbesondere alle Erfassungsmittel (23) einer Gruppe (7) als entlang der Behandlungsstraße (1) angeordnete Funk-Empfänger (30) ausgebildet sind, die das Funksignal (F1, F2) eines Reifeninnendrucksensors (31) empfangen und insbesondere die Intensität des Funksignals oder eine Laufzeitdifferenz eines Funksignals zwischen zwei Funk-Empfängern (30) ermitteln; UND/ODER wobei
- zwei oder mehr Erfassungsmittel (24) und insbesondere alle Erfassungsmittel (24) einer Gruppe (8) als Zustandssensoren (33) ausgebildet sind, die den momentanen Zustand (FREI / KONTAKT) eines Kontaktierungselementes (34, 35) erfassen, das in oder an einer Schleppvorrichtung (10) der Behandlungsstraße anordenbar ist, insbesondere in oder an einem Mitnehmer der Schleppvorrichtung (10).

2. Erkennungsvorrichtung nach Anspruch 1, wobei die Auswerteeinrichtung (13) dazu ausgebildet ist, die Soll-Position (B) eines Fahrzeugs als Eingangswert zu beziehen oder aus der Bewegung des Fördermittels, insbesondere einer Schleppvorrichtung (10) der Behandlungsstraße (1), und einer Startposition (A0) des Fahrzeugs (2, 3) zu Beginn eines Behandlungsvorgangs zu ermitteln.

3. Erkennungsvorrichtung nach Anspruch 1 oder 2, wobei die Erkennungsvorrichtung mindestens zwei Gruppen (5, 6, 7, 8) mit jeweils unterschiedlichen Erfassungsmitteln (21, 22, 23, 24) aufweist.

4. Erkennungsvorrichtung nach Anspruch 1, 2 oder 3, wobei die Auswerteeinrichtung (13) dazu ausgebildet ist,
- das Überdecken eines Lichtaufnehmers (21, 25) durch eine vordere Kontur, insbesondere eine Grenzkontur (VK) eines Fahrzeugs (2, 3) auf Basis einer Verminderung der aufgenommenen Lichtintensität (I) zu ermitteln und/oder das Passieren eines Lichtaufnehmers durch eine hintere Kontur, insbesondere eine hintere Grenzkontur (HK) eines Fahrzeugs (2, 3) auf Basis einer Erhöhung der aufgenommenen Lichtintensität (I) zu ermitteln, UND/ODER
- das Überfahren eines flexiblen Hohlkörpers (27) durch eine Änderung des Fluidzustands, insbesondere eines Fluiddrucks oder einer Fluidbewegung, in dem Hohlkörper (27) oder an dem verbundenen Sensor (29) zu ermitteln, UND/ODER
- die momentane Position (A) eines Reifeninnendrucksensors (31) bzw. eines Fahrzeugrades (14, 15) auf Basis der Intensitäten zu ermitteln, die von mehreren Funk-Empfängern (30) für dasselbe Funksignal (F1, F2) ermittelt werden, UND/ODER
- die momentane Position (A) eines Reifeninnendrucksensors (31) bzw. eines Fahrzeugrades (14, 15) auf Basis einer Laufzeitdifferenz eines Funksignals (F1, F2) zu zwei oder mehr Funk-Empfängern (30) zu ermitteln, UND/ODER
- die momentane Position (A) eines Fahrzeugs (2, 3) oder eine Abweichung von einer Soll-Position (B) aus der bekannten Anordnungsposition (K1, K2) eines Zustandssensors (33) und dem jeweils erfassten Schaltzustand (FREI / KONTAKT) eines Kontaktierungselements (34, 35) zu ermitteln, das von dem Zustandssensor (33) erfasst wird.

5. Erkennungsvorrichtung nach einem der vorhergehenden Ansprüche, wobei
- ein Kontaktierungselement (34) gemäß einer Tastfunktion dazu ausgebildet ist, bei Anlage eines Fahrzeugrades (14, 15) an dem Kontaktierungselement (34) von einem ersten Zustand (FREI) in einen zweiten Zustand (KONTAKT) versetzt zu werden und sich bei einem Verlust der Anlage eines Fahrzeugrades (14, 15) selbsttätig in den ersten Zustand (FREI) zu versetzen, UND/ODER wobei
- ein Kontaktierungselement (35) gemäß einer semi-stabilen oder bi-stabilen Schaltfunktion dazu ausgebildet ist, bei einer Anlage eines Fahrzeugrades (14, 15) an dem Kontaktierungselement (35) von einem ersten Zustand (FREI) in einen zweiten Zustand (KONTAKT) versetzt zu werden und diesen Zustand zu halten, bis das Kontaktierungselement (35) durch externe Einwirkung in den ersten Zustand (FREI) versetzt zu werden.

6. Erkennungsvorrichtung nach einem der vorhergehenden Ansprüche, wobei die Erkennungsvorrichtung (4) einen Zustandsschätzer (39) aufweist, der dazu ausgebildet ist, auf Basis einer Soll-Position (B) für ein Fahrzeug (2, 3) einen Erwartungswert (D*) für die Erfassungsdaten eines oder mehrerer Erfassungsmittel (21, 22, 23, 24) zu berechnen.

7. Behandlungsstraße zur Oberflächenbehandlung von Fahrzeugen (2, 3), insbesondere Autowaschstraße, wobei die Behandlungsstraße (1) ein Fördermittel zur angetriebenen Bewegung eines oder mehrerer Fahrzeuge (2) durch die Behandlungsstraße (1) umfasst, das eine Schleppvorrichtung (10) mit mehreren Mitnehmern (12) aufweist, die dazu ausgebildet sind, ein zu behandelndes Fahrzeug (2, 3) unter Anlage eines Fahrzeugrades (13, 14) zu bewegen, und wobei die Behandlungsstraße (1) mehrere entlang der Schleppvorrichtung (10) angeordnete Behandlungseinrichtungen (16-20) umfasst, **dadurch gekennzeichnet, dass** die Behandlungsstraße (1) eine Erkennungsvorrichtung (4) nach einem der vorhergehenden Ansprüche umfasst.

8. Behandlungsstraße nach Anspruch 7, wobei die Behandlungsstraße (1) eine Konturerfassung (37) aufweist, die für ein zu behandelndes Fahrzeug (2, 3) die relativen Abstände (L1, L2) der wesentlichen Konturbereiche des Fahrzeugs (2, 3) erfasst, insbesondere die Abstände zwischen einer vorderen Grenzkontur (VK) des Fahrzeugs, einer hinteren Grenzkontur (HK) des Fahrzeugs und zumindest einem Bezugspunkt (R1) an einem Fahrzeugrad (14), insbesondere mindestens einem Bezugspunkt (R1, R2) an einem Fahrzeugrad (14, 15) jeder Achse.

9. Behandlungsstraße nach einem der vorhergehenden Ansprüche 7 oder 8, wobei
- die Steuerung (38) der Behandlungsstraße (1) und/oder die Auswerteeinrichtung (13) und/oder ein Zustandsschätzer (39) dazu ausgebildet ist, eine Soll-Position (B) für ein Fahrzeug (2, 3) auf Basis der Bewegung der Schleppvorrichtung (10) und/oder deren Mitnehmer (12) zu ermitteln, UND/ODER wobei
- die Steuerung (38) der Behandlungsstraße (1) und/oder die Auswerteeinrichtung (13) und/oder ein Zustandsschätzer (39) dazu ausgebildet ist, eine Abweichung eines Fahrzeugs (2, 3) von einer Soll-Position (B) festzustellen, wenn die Erfassungsdaten (D) einer oder mehrerer Erfassungsmitteln (21, 22, 23, 24) in unzulässiger Weise von einem Erwartungswert (D*) abweichen, UND/ODER wobei
- die Steuerung (38) der Behandlungsstraße (1) und/oder die Auswerteeinrichtung (13) und/oder ein Zustandsschätzer (39) dazu ausgebildet ist, bei Feststellung einer Abweichung eines Fahrzeugs (2, 3) von einer Soll-Position (B) den Behandlungsvorgang in einem Sicherheitsbetrieb fortzusetzen, insbesondere unter Vorgabe strengerer Sicherheitsparameter oder Abschalt-Grenzwerte für eine oder mehrere Behandlungseinrichtungen (16-20), UND/ODER wobei
- die Steuerung (38) der Behandlungsstraße (1) und/oder die Auswerteeinrichtung (13) und/oder ein Zustandsschätzer (39) dazu ausgebildet ist, bei Feststellung einer Abweichung eines Fahrzeugs von einer Soll-Position (B) eine neue Soll-Position (B*) zu erfassen, auf deren Basis der Behandlungsvorgang fortgesetzt wird.

10. Behandlungsstraße nach einem der vorhergehenden Ansprüche 7, 8 oder 9, wobei
- die Steuerung (38) der Behandlungsstraße (1) und/oder die Auswerteeinrichtung (13) und/oder ein Zustandsschätzer (39) dazu ausgebildet ist, bei Abweichung eines Fahrzeugs (2, 3) von einer Soll-Position (B) auf Basis der bekannten relativen Abstände (L1, L2) der wesentlichen Konturbereiche dieses Fahrzeugs (2, 3) und der bekannten Anordnung und Bewegung der Mitnehmer (12) an der Schleppvorrichtung (10) die nächste wahrscheinliche Anlage zwischen einem Fahrzeugrad (14, 15) und einem Mitnehmer der Schleppvorrichtung zu ermitteln und eine neue Soll-Position (B*) für das Fahrzeug festzulegen, UND/ODER wobei
- die Steuerung (38) der Behandlungsstraße (1) und/oder die Auswerteeinrichtung (13) und/oder ein Zustandsschätzer (39) dazu ausgebildet ist, auf Basis der bekannten relativen Abstände (L1, L2) der wesentlichen Konturbereiche von zwei benachbarten Fahrzeugen (2, 3) und zumindest einer neu festgelegten Soll-Position (B*) dieser Fahrzeuge (2, 3) den wahrscheinlichen Fahrzeugabstand (X') zu ermitteln, UND/ODER wobei
- die Steuerung (38) der Behandlungsstraße (1) und/oder die Auswerteeinrichtung (13) und/oder ein Zustandsschätzer (39) dazu ausgebildet ist, den Behandlungsvorgang zu unterbrechen, wenn ein wahrscheinlicher Fahrzeugabstand (X') zwischen zwei benachbarten Fahrzeugen (2, 3), der auf Basis zumindest einer neu festgelegten Soll-Position (B*) berechnet ist, einen vorgegebenen Mindestabstand (Xmin) unterschreitet, UND/ODER wobei
- die Steuerung (38) der Behandlungsstraße (1) und/oder die Auswerteeinrichtung (13) und/oder ein Zustandsschätzer (39) dazu ausgebildet ist, einen Behandlungsvorgang in der Behandlungsstraße (1) auf Basis einer neu festgelegten Soll-Position (B*) fortzusetzen, wenn der wahrscheinliche Fahrzeugabstand (X') zwischen zwei benachbarten Fahrzeugen (2, 3), der auf Basis der neu festgelegten Soll-Position (B*) berechnet ist, einen vorgegebenen Mindestabstand (Xmin) überschreitet.

11. Behandlungsstraße nach einem der vorhergehenden Ansprüche 7 bis 10, wobei ein oder mehrere Behandlungseinrichtungen (16-20) eigene Messmittel zur Bestimmung einer absoluten oder relativen Position (C) einer Fahrzeugkontur aufweisen und die Steuerung (38) der Behandlungsstraße (1) und/oder die Auswerteeinrichtung (13) und/oder ein Zustandsschätzer (39) dazu ausgebildet ist, eine Abweichung eines Fahrzeugs (2, 3) von der Soll-Position (B) festzustellen, wenn die gemäß einem Messmittel einer Behandlungseinrichtung (16-20) erfasste Position (C) in unzulässiger Weise von einem Erwartungswert abweicht, der auf Basis der Soll-Position (B) berechnet ist.

12. Fahrzeugbehandlungsverfahren zur Behandlung mindestens eines Fahrzeugs (2, 3) in einer Behandlungsstraße (1), wobei die Behandlungsstraße (1) ein Fördermittel zum angetriebenen Bewegen mindestens eines Fahrzeugs (2, 3) umfasst sowie mindestens eine Gruppe (5, 6, 7, 8) von Erfassungsmitteln (21, 22, 23, 24), die an bekannten Positionen (K1, K2) entlang der Behandlungsstraße (1) angeordnet sind, **dadurch gekennzeichnet, dass** das Fahrzeugbehandlungsverfahren die folgenden Schritte umfasst:
- Bewegen mindestens eines Fahrzeugs (2, 3) während eines Waschvorgang durch die Behandlungsstraße;
- Betätigen einer oder mehrerer Behandlungseinrichtungen (16 bis 20) der Behandlungsstraße (1) auf Basis einer anfänglichen Soll-Position (B);
- Erkennen oder Überwachen einer momentanen Position des mindestens einen Fahrzeugs (2, 3) in der Behandlungsstraße (1) während des Behandlungsvorgangs durch:
∘ Beziehen von Erfassungsdaten (D) von mehreren Erfassungsmitteln (21, 22, 23, 24) ;
∘ Ermitteln einer momentanen Position (A) eines oder mehrerer Fahrzeuge (2, 3) innerhalb der Behandlungsstraße (1) aus den Erfassungsdaten (D);
∘ Ermitteln einer Abweichung eines Fahrzeugs (2, 3) von einer Soll-Position (B);
- wobei bei Feststellung einer Abweichung eines Fahrzeugs (2, 3) von der anfänglichen Soll-Position (B), eine neue Soll-Position (B*) erfasst wird und der Behandlungsvorgang auf Basis der neuen Soll-Position (B*) fortgesetzt wird.

13. Fahrzeugbehandlungsverfahren nach Anspruch 12, wobei das Erkennen oder Überwachen einer momentanen Position des mindestens einen Fahrzeugs (2, 3) in der Behandlungsstraße (1) weiterhin umfasst:
- Beziehen der Soll-Position (B) eines Fahrzeugs als Eingangswert, ODER
- Ermitteln der Soll-Position (B) eines Fahrzeugs aus der Bewegung des Fördermittels, insbesondere einer Schleppvorrichtung (10) der Behandlungsstraße (1), und einer Startposition (A0) des Fahrzeugs (2, 3) zu Beginn eines Behandlungsvorgangs.

## Claims

1. Detection device for monitoring the position of vehicles (2, 3) in a treatment line (1) during a treatment process, wherein the vehicles (2, 3) in the treatment line (1) can be moved by a conveyor means, wherein the detection device (4) comprises at least one group (5, 6, 7, 8) of sensing means (21, 22, 23, 24) and an evaluation device (13), wherein the sensing means (21, 22, 23, 24) can be arranged at known positions (K1, K2) along the treatment line (1) and are connected to the evaluation device (13), **characterized in that** the evaluation unit (13) is designed to obtain sensing data (D) from a plurality of sensing means (21, 22, 23, 24) and to determine therefrom the instantaneous position (A) of one or more vehicles (2, 3) within the treatment line (1) and the deviation of a vehicle (2, 3) from a setpoint position (B), wherein
- two or more sensing means (21) and, in particular, all the sensing means (21) of a group (5) are embodied as planar light sensors (25) which are arranged in the floor/ground area, in particular as solar cells; AND/OR wherein
- two or more sensing means (22) and, in particular, all the sensing means (22) of a group (6) are embodied as flexible hollow bodies (27) which are arranged in the floor/ground area, filled with a fluid (28) and connected to one or more sensors (29), in particular to a pressure sensor or a flow sensor; AND/OR, wherein
- two or more sensing means (23) and, in particular, all the sensing means (23) of a group (7) are embodied as radio receivers (30) which are arranged along the treatment line (1), receive the radio signal (F1, F2) of a tyre internal pressure sensor (31) and determine, in particular, the intensity of the radio signal or a transit time difference of a radio signal between two radio receivers (30);
AND/OR, wherein
- two or more sensing means (24) and, in particular, all the sensing means (24) of a group (8) are embodied as state sensors (33) which detect the instantaneous state (FREE/CONTACT) of a contact-making element (34, 35) which can be arranged in or on a towing device (10) of the treatment line, in particular in or on a driver of the towing device (10).

2. Detection device according to Claim 1, wherein the evaluation device (13) is designed to obtain the setpoint position (B) of a vehicle as an input value or to determine said setpoint position from the movement of the conveying means, in particular of a towing device (10) of the treatment line (1), and a starting position (A0) of the vehicle (2, 3) at the start of a treatment process.

3. Detection device according to Claim 1 or 2, wherein the detection device has at least two groups (5, 6, 7, 8) with respectively different sensing means (21, 22, 23, 24).

4. Detection device according to Claim 1, 2 or 3, wherein the evaluation device (13) is designed
- to determine that a light sensor (21, 25) is covered by a front contour, in particular a boundary contour (VK) of a vehicle (2, 3), on the basis of a reduction in the received light intensity (I), and/or to determine the passing of a light sensor through a rear contour, in particular a rear boundary contour (HK) of a vehicle (2, 3), on the basis of an increase in the received light intensity (I), AND/OR
- to determine that a flexible hollow body (27) is being travelled over through a change in the fluid state, in particular a fluid pressure or a fluid movement, in the hollow body (27) or at the connected sensor (29),
AND/OR
- to determine the instantaneous position (A) of a tyre internal pressure sensor (31) or of a vehicle wheel (14, 15) on the basis of the intensities which are determined by multiple radio receivers (30) for the same radio signal (F1, F2), AND/OR
- to determine the instantaneous position (A) of a tyre internal pressure sensor (31) or of a vehicle wheel (14, 15) on the basis of a transit time difference of a radio signal (F1, F2) to two or more radio receivers (30), AND/OR
- to determine the instantaneous position (A) of a vehicle (2, 3) or a deviation from a setpoint position (B) from the known arrangement position (K1, K2) of a state sensor (33) and the respectively detected switched state (FREE/CONTACT) of a contact-making element (34, 35) which is detected by the state sensor (33).

5. Detection device according to one of the preceding claims, wherein
- according to a sensing function a contact-making element (34) is designed, in the event of a vehicle wheel (14, 15) being in contact with the contact-making element (34), to be changed from a first state (FREE) into a second state (CONTACT), and to change automatically into the first state (FREE) in the event of loss of the contact with a vehicle wheel (14, 15), AND/OR wherein
- according to a semi-stable or bi-stable switching function a contact-making element (35) is designed, in the event of a vehicle wheel (14, 15) being in contact with the contact-making element (35), to be changed from a first state (FREE) into a second state (CONTACT), and to maintain this state until the contact-making element (35) is changed into the first state (FREE) by an external effect.

6. Detection device according to one of the preceding claims, wherein the detection device (4) has a state estimator (39) which is designed to calculate, on the basis of a setpoint position (B) for a vehicle (2, 3), an empirical value (D*) for the sensing data of one or more sensing means (21, 22, 23, 24).

7. Treatment line for surface treatment of vehicles (2, 3), in particular a carwash, wherein the treatment line (1) comprises a conveying means for the driven movement of one or more vehicles (2) through the treatment line (1), which conveying means has a towing device (10) with a plurality of drivers (12) which are designed to move a vehicle (2, 3) to be treated, with contact with a vehicle wheel (13, 14), and wherein the treatment line (1) comprises a plurality of treatment devices (16-20) which are arranged along the towing device (10), **characterized in that** the treatment line (1) comprises a detection device (4) according to one of the preceding claims.

8. Treatment line according to Claim 7, wherein the treatment line (1) comprises a contour-sensing means (37) which senses, for a vehicle (2, 3) to be treated, the relative distances (L1, L2) of the essential contour areas of the vehicle (2, 3), in particular the distances between a front boundary contour (VK) of the vehicle, a rear boundary contour (HK) of the vehicle and at least one reference point (R1) on a vehicle wheel (14), in particular at least one reference point (R1, R2) on a vehicle wheel (14, 15) of each axle.

9. Treatment line according to one of the preceding Claims 7 and 8, wherein
- the controller (38) of the treatment line (1) and/or the evaluation device (13) and/or a state estimator (39) are/is designed to determine a setpoint position (B) for a vehicle (2, 3) on the basis of the movement of the towing device (10) and/or the drivers (12) thereof, AND/OR wherein
- the controller (38) of the treatment line (1) and/or the evaluation device (13) and/or a state estimator (39) are/is designed to detect a deviation of a vehicle (2, 3) from a setpoint position (B) if the sensing data (D) of one or more sensing means (21, 22, 23, 24) deviate in an unacceptable way from an empirical value (D*) AND/OR wherein
- the controller (38) of the treatment line (1) and/or the evaluation device (13) and/or a state estimator (39) are/is designed, in the event of detection of a deviation of a vehicle (2, 3) from a setpoint position (B),to continue the treatment process in a safety mode, in particular while prescribing relatively strict safety parameters or switch-off limiting values for one or more treatment devices (16-20), AND/OR wherein
- the controller (38) of the treatment line (1) and/or the evaluation device (13) and/or a state estimator (39) are/is designed to sense, in the event of a deviation of a vehicle from a setpoint position (B), a new setpoint position (B*), on the basis of which the treatment process is continued.

10. Treatment line according to one of the preceding Claims 7, 8 or 9, wherein
- the controller (38) of the treatment line (1) and/or the evaluation device (13) and/or a state estimator (39) are/is designed to determine, in the event of a deviation of a vehicle (2, 3) from a setpoint position (B), the next probable contact between a vehicle wheel (14, 15) and a driver of the towing device on the basis of the known relative distances (L1, L2) of the essential contour areas of this vehicle (2, 3) and of the known arrangement and movement of the drivers (12) on the towing device (10) and to define a new setpoint position (B*) for the vehicle, AND/OR wherein
- the controller (38) of the treatment line (1) and/or the evaluation device (13) and/or a state estimator (39) are/is designed to determine the probable distance between vehicles (X') on the basis of the known relative distances (L1, L2) of the essential contour areas of two adjacent vehicles (2, 3) and of at least one newly defined setpoint position (B*) of these vehicles (2, 3), AND/OR wherein
- the controller (38) of the treatment line (1) and/or the evaluation device (13) and/or a state estimator (39) are/is designed to interrupt the treatment process if a probable distance (X') between two adjacent vehicles (2, 3), which distance is calculated on the basis of at least one newly defined setpoint position (B*), undershoots a prescribed minimum distance (Xmin), AND/OR wherein
- the controller (38) of the treatment line (1) and/or the evaluation device (13) and/or a state estimator (39) are/is designed to continue a treatment process in the treatment line (1) on the basis of a newly defined setpoint position (B*) if the probable distance (X') between two adjacent vehicles (2, 3), which distance is calculated on the basis of the newly defined setpoint position (B*), exceeds a predefined minimum distance (Xmin).

11. Treatment line according to one of the preceding Claims 7 to 10, wherein one or more treatment devices (16-20) has/have separate measuring means for determining an absolute or relative position (C) of a vehicle contour, and the controller (38) of the treatment line (1) and/or the evaluation device (13) and/or a state estimator (39) are/is designed to detect a deviation of a vehicle (2, 3) from the setpoint position (B) if the position (C) which is sensed according to a measuring means of a treatment device (16-20) deviates in an unacceptable way from an empirical value which is calculated on the basis of the setpoint position (B) .

12. Vehicle treatment method for treating at least one vehicle (2, 3) in a treatment line (1), wherein the treatment line (1) comprises a conveying means for the driven movement of at least one vehicle (2, 3), and at least one group (5, 6, 7, 8) of sensing means (21, 22, 23, 24) which are arranged at known positions (K1, K2) along the treatment line (1), **characterized in that** the vehicle treatment method comprises the following steps:
- moving at least one vehicle (2, 3) through the treatment line during a washing process;
- activating one or more treatment devices (16 to 20) of the treatment line (1) on the basis of an initial setpoint position (B);
- detecting or monitoring an instantaneous position of the at least one vehicle (2, 3) in the treatment line (1) during the treatment process by:
∘ obtaining sensing data (D) from a plurality of sensing means (21, 22, 23, 24);
∘ determining an instantaneous position (A) of one or more vehicles (2, 3) within the treatment line (1) from the sensing data (D); and
∘ determining a deviation of a vehicle (2, 3) from a setpoint position (B);
- wherein when a deviation of a vehicle (2, 3) from the initial setpoint position (B) is detected, a new setpoint position (B*) is sensed and the treatment process is continued on the basis of the new setpoint position (B*).

13. Vehicle treatment method according to Claim 12, wherein the detection or monitoring of an instantaneous position of the at least one vehicle (2, 3) in the treatment line (1) also comprises:
- obtaining the setpoint position (B) of a vehicle as an input value, OR
- determining the setpoint position (B) of a vehicle from the movement of the conveying means, in particular of a towing device (10) of the treatment line (1) and a starting position (A0) of the vehicle (2, 3) at the start of a treatment process.

## Revendications

1. Dispositif de reconnaissance pour la surveillance de la position de véhicules (2, 3) dans une ligne de traitement (1) pendant un processus de traitement, dans lequel les véhicules (2, 3) peuvent être déplacés dans la ligne de traitement (1) par un moyen de transport, dans lequel le dispositif de reconnaissance (4) comprend au moins un groupe (5, 6, 7, 8) de moyens de détection (21, 22, 23, 24) et un dispositif d'évaluation (13), dans lequel les moyens de détection (21, 22, 23, 24) peuvent être agencés à des positions connues (K1, K2) le long de la ligne de traitement (1) et sont reliés au dispositif d'évaluation (13),
**caractérisé en ce que** l'unité d'évaluation (13) est conçue pour obtenir des données de détection (D) en provenance de plusieurs moyens de détection (21, 22, 23, 24) et pour déterminer à partir de celles-ci la position instantanée (A) d'un ou de plusieurs véhicules (2, 3) à l'intérieur de la ligne de traitement (1) et l'écart d'un véhicule (2, 3) par rapport à une position de consigne (B), dans lequel
- deux moyens de détection (21) ou plus, et en particulier tous les moyens de détection (21) d'un groupe (5), sont réalisés sous la forme de capteurs de lumière plans (25) agencés dans la surface du sol, en particulier sous la forme de cellules solaires ; ET/OU dans lequel
- deux moyens de détection (22) ou plus, et en particulier tous les moyens de détection (22) d'un groupe (6), sont réalisés sous la forme de corps creux flexibles (27) agencés dans la zone du sol et remplis d'un fluide (28), qui sont reliés à un ou plusieurs capteurs (29), en particulier à un capteur de pression ou à un capteur de débit ; ET/OU dans lequel
- deux moyens de détection (23) ou plus, et en particulier tous les moyens de détection (23) d'un groupe (7), sont réalisés sous la forme de récepteurs radio (30) disposés le long de la ligne de traitement (1), qui reçoivent le signal radio (F1, F2) d'un capteur de pression interne de pneu (31) et déterminent en particulier l'intensité du signal radio ou une différence de temps de transit d'un signal radio entre deux récepteurs radio (30) ; ET/OU dans lequel
- deux moyens de détection (24) ou plus, et en particulier tous les moyens de détection (24) d'un groupe (8), sont réalisés sous la forme de capteurs d'état (33) qui détectent l'état instantané (LIBRE / CONTACT) d'un élément de contact (34, 35) qui peut être agencé dans ou sur un dispositif de remorquage (10) de la ligne de traitement, en particulier dans ou sur un dispositif d'entraînement du dispositif de remorquage (10).

2. Dispositif de reconnaissance selon la revendication 1, dans lequel le dispositif d'évaluation (13) est conçu pour obtenir la position de consigne (B) d'un véhicule en tant que valeur d'entrée ou pour la déterminer à partir du mouvement du moyen de transport, en particulier d'un dispositif de remorquage (10) de la ligne de traitement (1), et d'une position de départ (A0) du véhicule (2, 3) au début d'un processus de traitement.

3. Dispositif de reconnaissance selon la revendication 1 ou 2, dans lequel le dispositif de reconnaissance comporte au moins deux groupes (5, 6, 7, 8) comprenant respectivement des moyens de détection (21, 22, 23, 24) différents.

4. Dispositif de reconnaissance selon la revendication 1, 2 ou 3, dans lequel le dispositif d'évaluation (13) est conçu
- pour déterminer le recouvrement d'un capteur de lumière (21, 25) par un contour avant, en particulier un contour de délimitation (VK) d'un véhicule (2, 3) sur la base d'une réduction de l'intensité lumineuse reçue (I) et/ou pour déterminer le franchissement par un capteur de lumière d'un contour arrière, en particulier un contour de délimitation arrière (HK) d'un véhicule (2, 3) sur la base d'une augmentation de l'intensité lumineuse (I) reçue, ET/OU
- pour déterminer le passage d'un corps creux flexible (27) par un changement de l'état d'un fluide, en particulier d'une pression de fluide ou d'un mouvement de fluide, dans le corps creux (27) ou au niveau du capteur (29) connecté, ET/OU
- pour déterminer la position instantanée (A) d'un capteur de pression interne de pneu (31) ou d'une roue de véhicule (14, 15) sur la base des intensités qui sont déterminées par plusieurs récepteurs radio (30) pour le même signal radio (F1, F2), ET/OU
- pour déterminer la position instantanée (A) d'un capteur de pression interne de pneu (31) ou d'une roue de véhicule (14, 15) sur la base d'une différence de temps de transit d'un signal radio (F1, F2) vers deux récepteurs radio (30) ou plus, ET/OU
- pour déterminer la position instantanée (A) d'un véhicule (2, 3) ou un écart par rapport à une position de consigne (B) à partir de la position d'agencement connue (K1, K2) d'un capteur d'état (33) et de l'état de commutation respectivement détecté (LIBRE / CONTACT) d'un élément de contact (34, 35) qui est détecté par le capteur d'état (33).

5. Dispositif de reconnaissance selon l'une des revendications précédentes, dans lequel
- un élément de mise en contact (34) est conçu, conformément à une fonction de palpage, pour passer d'un premier état (LIBRE) à un deuxième état (CONTACT) lorsqu'une roue de véhicule (14, 15) appuie sur l'élément de contact (34) et pour se mettre automatiquement dans le premier état (LIBRE) lors de la perte de contact d'une roue de véhicule (14, 15), ET/OU dans lequel
- un élément de mise en contact (35) est conçu, conformément à une fonction de commutation semi-stable ou bistable, pour passer d'un premier état (LIBRE) à un second état (CONTACT) lorsqu'une roue de véhicule (14, 15) vient en contact avec l'élément de mise en contact (35) et pour maintenir cet état jusqu'à ce que l'élément de mise en contact (35) soit amené à passer dans le premier état (LIBRE) par une action extérieure.

6. Dispositif de reconnaissance selon l'une des revendications précédentes, dans lequel le dispositif de reconnaissance (4) comprend un estimateur d'état (39) conçu pour calculer, sur la base d'une position de consigne (B) d'un véhicule (2, 3), une valeur attendue (D*) pour les données de détection d'un ou de plusieurs moyens de détection (21, 22, 23, 24).

7. Ligne de traitement pour le traitement de surface de véhicules (2, 3), en particulier le lavage de voitures, dans laquelle la ligne de traitement (1) comprend un moyen de transport pour le déplacement entraîné d'un ou de plusieurs véhicules (2) à travers la ligne de traitement (1), qui comporte un dispositif de remorquage (10) doté de plusieurs dispositifs d'entraînement (12) qui sont conçus pour déplacer un véhicule (2, 3) à traiter par appui d'une roue de véhicule (13, 14), et dans laquelle la ligne de traitement (1) comprend une pluralité de dispositifs de traitement (16-20) agencés le long dudit dispositif de remorquage (10), **caractérisé en ce que** la ligne de traitement (1) comprend un dispositif de reconnaissance (4) selon l'une des revendications précédentes.

8. Ligne de traitement selon la revendication 7, dans laquelle la ligne de traitement (1) comprend un dispositif de détection de contour (37) qui, pour un véhicule (2, 3) à traiter, détecte les distances relatives (L1, L2) des zones de contour principales du véhicule (2, 3), en particulier les distances entre un contour limite avant (VK) du véhicule, un contour limite arrière (HK) du véhicule et au moins un point de référence (R1) sur une roue de véhicule (14), en particulier au moins un point de référence (R1, R2) sur une roue de véhicule (14, 15) de chaque essieu.

9. Ligne de traitement selon l'une des revendications 7 ou 8 précédentes, dans laquelle
- le dispositif de commande (38) de la ligne de traitement (1) et/ou le dispositif d'évaluation (13) et/ou un estimateur d'état (39) est conçu pour déterminer une position de consigne (B) d'un véhicule (2, 3) sur la base du mouvement du dispositif de remorquage (10) et/ou de son dispositif d'entraînement (12), ET/OU dans laquelle
- le dispositif commande (38) de la ligne de traitement (1) et/ou le dispositif d'évaluation (13) et/ou un estimateur d'état (39) est conçu pour déterminer un écart d'un véhicule (2, 3) par rapport à une position de consigne (B) lorsque les données de détection (D) d'un ou de plusieurs moyens de détection (21, 22, 23, 24) s'écartent de manière inacceptable d'une valeur attendue (D*), ET/OU dans laquelle
- le dispositif de commande (38) de la ligne de traitement (1) et/ou le dispositif d'évaluation (13) et/ou un estimateur d'état (39) est conçu pour poursuivre le processus de traitement dans un mode de sécurité lorsqu'un écart d'un véhicule (2, 3) par rapport à une position de consigne (B) est détecté, en particulier en spécifiant des paramètres de sécurité plus stricts ou des valeurs limites de désactivation pour un ou plusieurs dispositifs de traitement (16-20), ET/OU dans laquelle
- le dispositif de commande (38) de la ligne de traitement (1) et/ou le dispositif d'évaluation (13) et/ou un estimateur d'état (39) est conçu pour détecter une nouvelle position de consigne (B*) sur la base de laquelle le processus de traitement est poursuivi, lorsqu'un écart d'un véhicule par rapport à une position de consigne (B) est détecté.

10. Ligne de traitement selon l'une des revendications précédentes 7, 8 ou 9, dans laquelle
- le dispositif de commande (38) de la ligne de traitement (1) et/ou le dispositif d'évaluation (13) et/ou un estimateur d'état (39) est conçu pour déterminer, en cas d'écart d'un véhicule (2, 3) par rapport à une position de consigne (B), sur la base des distances relatives connues (L1, L2) des zones de contour principales dudit véhicule (2, 3) et de l'agencement et du mouvement connus des dispositifs d'entraînement (12) sur le dispositif de remorquage (10), pour déterminer le prochain contact probable entre une roue de véhicule (14, 15) et un dispositif d'entraînement et établir une nouvelle position de consigne (B*) du véhicule, ET/OU dans laquelle
- le dispositif de commande (38) de la ligne de traitement (1) et/ou le dispositif d'évaluation (13) et/ou un estimateur d'état (39) est conçu pour déterminer la distance de véhicule probable (X') sur la base des distances relatives connues (L1, L2) des zones de contour principales de deux véhicules adjacents (2, 3) et d'au moins une position de consigne (B*) nouvellement établie desdits véhicules (2, 3), ET/OU dans laquelle
- le dispositif de commande (38) de la ligne de traitement (1) et/ou le dispositif d'évaluation (13) et/ou un estimateur d'état (39) est conçu pour interrompre le processus de traitement si une distance de véhicule probable (X') entre deux véhicules adjacents (2, 3), calculée sur la base d'au moins une position de consigne (B*) nouvellement établie, devient inférieure à une distance minimale prédéterminée (Xmin), ET/OU dans laquelle
- le dispositif de commande (38) de la ligne de traitement (1) et/ou le dispositif d'évaluation (13) et/ou un estimateur d'état (39) est conçu pour poursuivre un processus de traitement dans la ligne de traitement (1) sur la base d'une position de consigne nouvellement définie (B*)
lorsque la distance de véhicule probable (X') entre deux véhicules adjacents (2, 3), calculée sur la base de la position de consigne nouvellement déterminée (B*), dépasse une distance minimale prédéterminée (Xmin).

11. Ligne de traitement selon l'une des revendications 7 à 10 précédentes, dans laquelle un ou plusieurs dispositifs de traitement (16-20) possèdent leurs propres moyens de mesure pour déterminer une position absolue ou relative (C) d'un contour de véhicule et le dispositif de commande (38) de la ligne de traitement (1) et/ou le dispositif d'évaluation (13) et/ou un estimateur d'état (39) est conçu pour établir un écart d'un véhicule (2, 3) par rapport à la position de consigne (B) lorsque la position (C) détectée conformément à un moyen de mesure d'un dispositif de traitement (16-20) s'écarte de manière inacceptable d'une valeur attendue calculée sur la base de la position de consigne (B).

12. Procédé de traitement de véhicules pour le traitement d'au moins un véhicule (2, 3) dans une ligne de traitement (1), dans lequel la ligne de traitement (1) comprend un moyen de transport pour le déplacement entraîné d'au moins un véhicule (2, 3) et au moins un groupe (5, 6, 7, 8) de moyens de détection (21, 22, 23, 24) agencés à des positions connues (K1, K2) le long de la ligne de traitement (1),
**caractérisé en ce que** le processus de traitement de véhicules comprend les étapes suivantes :
- le déplacement d'au moins un véhicule (2, 3) dans la ligne de traitement pendant un processus de lavage ;
- l'actionnement d'un ou de plusieurs dispositifs de traitement (16 à 20) de la ligne de traitement (1) sur la base d'une position de consigne initiale (B) ;
- la détection ou la surveillance d'une position instantanée dudit au moins un véhicule (2, 3) dans la ligne de traitement (1) pendant le processus de traitement par :
∘ l'obtention de données de détection (D) en provenance d'une pluralité de moyens de détection (21, 22, 23, 24) ;
∘ la détermination d'une position instantanée (A) d'un ou de plusieurs véhicules (2, 3) dans la ligne de traitement (1) à partir des données de détection (D) ;
∘ la détermination d'un écart d'un véhicule (2, 3) par rapport à une position de consigne (B) ;
- dans lequel, lorsqu'un écart d'un véhicule (2, 3) par rapport à la position de consigne initiale (B) est établi, une nouvelle position de consigne (B*) est détectée et le processus de traitement est poursuivi sur la base de la nouvelle position de consigne (B*).

13. Procédé de traitement de véhicule selon la revendication 12, dans lequel la détection ou la surveillance d'une position instantanée dudit au moins un véhicule (2, 3) dans la ligne de traitement (1) comprend en outre :
- l'obtention de la position de consigne (B) d'un véhicule en tant que valeur d'entrée, OU
- la détermination de la position de consigne (B) d'un véhicule à partir du mouvement du moyen de transport, en particulier d'un dispositif de remorquage (10) de la ligne de traitement (1), et d'une position de départ (A0) du véhicule (2, 3) au début d'un processus de traitement.
